# EUROPEAN PATENT SPECIFICATION

(11) **EP 2 444 980 B1**
(45) Date of publication and mention of the grant of the patent: **26.03.2014**
(21) Application number: 10013863.5
(22) Date of filing: 21.10.2010
(51) Int. Cl.: H01B 3/40, H01B 7/28, H01B 7/295

(54) **A cable comprising a layer which is formed of a composition containing epoxy-groups**
Aus einer Schicht aus einer Zusammensetzung mit einer Epoxidgruppe hergestelltes Kabel
Câble comportant une couche formée d'une composition contenant des groupes époxy

(43) Date of publication of application: 25.04.2012
(73) Proprietor: Borealis AG, 1220 Vienna (AT)
(72) Inventor: Fagrell, Ola, 44445 Stenungsund (SE); Prieto, Oscar, 41252 Gothenburg (SE)
(74) Representative: Kador & Partner

(56) References cited:
- JP-A- 7 173 339
- JP-A- 7 220 536
- JP-A- 2000 230 054

## Description

The present invention relates to a cable layer which has been formed from a polyolefin composition comprising epoxy-groups and a process for the production thereof and a process for the crosslinking thereof.

In power cables, such as power cables for medium voltage (6 to 36 kV) and high voltages (> 36 kV), the electric conductor is usually coated first with an inner semiconducting layer, followed by an insulating layer, then an outer semiconducting layer, followed by optional layer(s) such as water-barrier layer(s) and on the outside optionally sheath layer(s). The layers of the cable are commonly based on different types of ethylene polymers.

The insulating layer and the semiconducting layers normally consist of ethylene homo- and/or copolymers which are preferably cross-linked. LDPE (low density polyethylene, i.e. polyethylene prepared by radical polymerization at a high pressure) cross-linked with peroxide, e.g. dicumyl peroxide, in connection with the extrusion of the cable, has become the predominant cable insulating material. The inner semiconducting layer normally comprises an ethylene copolymer, such as an ethylene-vinyl acetate copolymer (EVA), ethylene methylacrylate copolymer (EMA), ethylene ethylacrylate copolymers (EEA), ethylene butylacrylate copolymer (EBA), cross-linking agent (e.g. peroxide) and sufficient amount and type of conductive filler to make the composition semiconductive. The composition of the outer semiconducting layer may differ from the composition of the inner semiconductive layer depending on whether it has to be strippable or not. If the outer semiconductive shall not be strippable the composition used can be of same type as for the inner semiconductive layer.

Although prior art compositions for layers in electric cables are satisfactory for many applications, there is always a desire to improve their characteristics such as processability and cross-linking temperature and eliminate or reduce any disadvantages they may have.

One disadvantage of usual cable layers is that cross-linking of cable layers is accomplished using peroxides. Crosslinking using peroxides suffers from some disadvantages. For example low-molecular by-products are formed during crosslinking which have unpleasant odor. Furthermore, prior to the extrusion of the polyolefin composition the peroxide has to be added in a separate processing step into the polymer which increase the lead time. In addition, to achieve a high crosslinking density, organic peroxide is required which release after peroxide degradation a high level of undesired by-products. The peroxide degradation temperature limits the maximum possible melt temperature in the extruder to about 140 °C. Above that temperature, crosslinking will occur in the extruder which will result in gel or scorch particles in the cable. However the maximum melt temperature at 140 °C in the extruder limits the extruder output and might result in a lower production speed.

Hence, it is the object of the present invention to provide a cable which can be crosslinked to the required crosslinking degree with a lower amount of peroxide or even without using peroxide at all.

Moreover, it is a further object of the present invention to provide a semiconductive composition which can be crosslinked at high temperature and at high cable line speed.

The above objects are achieved by the present invention by providing a cable, according to claim 1 wherein the optional conductive filler is preferably carbon black.

The cable of the invention is referred herein also shortly as cable.

In the present invention the term "formed from" encompasses also the case where the composition has been subjected to conditions under which crosslinking of the epoxy-groups promoted by the crosslinking agent (B) takes place. Hence, the layer may comprise, preferably consists, of, the composition or product obtained from the composition after crosslinking.

The term "surrounded" encompasses that the respective layer is directly attached to the conductor as well as that one or more further layers are present between the respective layer and the conductor.

The polyolefin composition of the invention comprised in at least one cable layer is referred herein also shortly as polyolefin composition and the olefin polymer (A) comprising epoxy-groups is referred herein also shortly as olefin polymer (A).

The term "conductor" means herein above and below that the conductor comprises one or more wires. The wire can be for any use and be e.g. optical, telecommunication or electrical wire. Moreover, the cable may comprise one or more such conductors. Preferably the conductor is an electrical conductor and comprises one or more metal wires.

Lewis acids or Brönsted acids as the crosslinking agent (B) are believed to catalyse the crosslinking reaction, but without a substantial net change in the amount of that substance in the system. Furthermore, at the molecular level, the crosslinking agent (B) is believed to be regenerated, at least partly, during each set of microscopic chemical events leading from a molecular entity of reactant to a molecular entity of product according to the definition of "catalyst" in IUPAC, Pure Appl. Chem., 66, 1077-1184 (1994) which is hereby incorporated by reference. Regenerate "at least partly" means that, as well known, the effect of the crosslinking agent may be influenced by the other components present in the polymer composition.

The used amount of the present crosslinking agent (B) can be chosen, depending on the desired catalytic effect.

It has been surprisingly found that the present new type of epoxy crosslinking agent (B) provides a superior crosslinkability of the epoxy groups. Therefore the amount of radical forming agents, like peroxide, can be reduced or completely avoided. Also the amount of volatile by-products formed during the crosslinking reaction is advantageously low. Thereby, the safety is improved and furthermore, the production lead time is decreased as an extra processing step, such as degassing step, can be reduced or avoided. Moreover, the obtained cables have less odor problems.

Preferably the at least one layer of the cable is selected from an insulation layer, a semiconductive layer or a jacketing layer, preferably from an insulation layer or a semiconductive layer.

In case a semiconductive layer comprises the polyolefin composition of the invention, then the composition further comprises conductive filler. Accordingly, the polyolefin composition comprising further a conductive filler and present in the semiconductive layer is referred herein also shortly as semiconductive polyolefin composition.

Preferably, the volume resistivity of the semiconductive polyolefin composition, determined according to ISO 3915 (1981) at room temperature is not higher than 100000 ohm*cm, preferably not higher than 1000 ohm*cm.

The cable is preferably a power cable, preferably a power cable operating at voltages 6 kV to 36 kV and known as medium voltage (MV) cables, at voltages higher than 36 kV, known as high voltage (HV) cables or extra high voltage (EHV) cables, and most preferably a MV cable. The terms have well known meanings and indicate the operating level of such cables.

More preferable the cable is a power cable according to claim 2.

Optionally, one or more of the other layer(s) comprises, preferably consists of, a polyolefin composition (b) comprising
- an olefin polymer (A) comprising epoxy-groups; and
- at least one crosslinking agent (B1) which accelerates the crosslinking reaction of epoxy-groups, preferably at least one crosslinking agent (B1) which is selected from
   (i) Lewis acids,
   (ii) Brönsted acids different from carboxylic acids,
   (iii) amines comprising at least one amino group,
   (iv) alcohols comprising at least two OH groups,
   (v) anhydrides of carboxylic acids,
   (vi) carboxylic acids comprising at least one carboxylic acid group,
or any mixtures thereof.

Even more preferably, the cable is a power cable comprising a conductor surrounded by at least an inner semiconductive layer, an insulation layer and an outer semiconductive layer, in that order, wherein the at least one layer comprises, preferably consists the polyolefin composition which comprises,
- an olefin polymer (A) comprising epoxy-groups;
- at least one crosslinking agent (B) which accelerates the crosslinking reaction of epoxy-groups and which is selected from
   (i) Lewis acids as defined in claim 1,
   (ii) Brönsted acids different from carboxylic acids as defined in claim 1; or
   (iii) any mixtures thereof, and
- optionally a conductive filler;
   and, optionally, one or more of the other layer(s) comprises, preferably consists of, a polyolefin composition (b) comprising
   - an olefin polymer (A) comprising epoxy-groups; and
   - at least one crosslinking agent (B1) which accelerates the crosslinking reaction of epoxy-groups, preferably at least one crosslinking agent (B1) which is selected from
      (i) Lewis acids,
      (ii) Brönsted acids different from carboxylic acids,
      (iii) amines comprising at least one amino group,
      (iv) alcohols comprising at least two OH groups,
      (v) anhydrides of carboxylic acids,
      (vi) carboxylic acids comprising at least one carboxylic acid group,
or any mixtures thereof.

In any of the above preferable embodiments the use of peroxide with the undesired problems as discussed above can be markedly reduced or completely avoided.

Hence, the polyolefin composition contains preferably at most 3.0 wt%, preferably less than 2.0 wt%, more preferably from 0 to less than 1.5 wt% of radical forming agents such as peroxides, even more preferably, the polyolefin composition is free of any added peroxide. Even more preferably the polymer compositions used to produce the layers of the cable contain at most 3.0 wt%, preferably less than 2.0 wt%, more preferably from 0 to less than 1.5 wt% peroxides, even more preferably, the polyolefin composition is free of any added peroxide and most preferably free of any radical forming agent.

The polyolefin composition of the invention has also very good strippability properties which are advantageous e.g. in strippable semiconductive applications in wire and cable, wherein peelable semiconductive layers are desired.

Even more preferable the power cable is according to claim 4.

The more preferred power cable is according to claim 5.

In the preferred embodiment the outer semiconductive layer comprises, preferably consists of, the semiconductive polyolefin composition as defined above or below, and the insulation layer comprises, preferably consists of the polyolefin composition (b) as defined above or below.

Such cable embodiment enables to crosslink the cable without using peroxide which is very beneficial in view of the problems caused by using peroxide as discussed above.

The following preferable subgroups and variants of the components, i.e. olefin polymer (A), crosslinking agent (B) or crosslinking agent (B1) can be combined in any order and apply naturally for both the polyolefin composition, the semiconductive polyolefin composition and for the polyolefin composition (b), as well as to cable, of the invention.

Preferably, crosslinking agent (B) is present in an amount of at least 0.05 wt%, more preferably of at least 0.1 wt% and most preferably of at least 0.2 wt% based on the amount of olefin polymer (A) and crosslinking agent (B).

Crosslinking agent (B) is preferably present in an amount of 8.0 wt% or less, more preferably in an amount of 5.0 wt% or less and most preferably in an amount of 2.0 wt% or less based on the amount of olefin polymer (A) and crosslinking agent (B).

The Lewis acids and Brönsted acids suitable as the crosslinking agent (B) are well known and commercially available or can be produced according to or analogously to a known literature.

Lewis acid as the crosslinking agent (B) is defined herein by a molecular entity (and the corresponding chemical species) that is an electron-pair acceptor and therefore able to react with a Lewis base to form a Lewis adduct, by sharing the electron pair furnished by the Lewis base.

In the present invention lanthanides are lanthanum, cerium, praseodymium, neodymium, samarium, europium, gadolinium, terbium, dysprosium, holmium, erbium, thulium, ytterbium or lutetium.

Preferable Lewis acids are compounds of the following formula (I)

M^{+m}Lₙ (I),

wherein
M is an element selected from lanthanides or an element of groups 2 to 14 of the IUPAC periodic table (1989) except the elements of the group 7 of the IUPAC periodic table (1989) and Be, C, Si, Ge, TI, Pb, Tc, Hg and Cd,
each L is the same or different and is a ligand linked to M; and
m is 1 to 4, and n is 1 to 4, with the proviso that m-n is 0.
Integer "n" thus depends on the oxidation state +m and is chosen to provide a net charge of the compound M^{+m} Lₙ to be 0.

In a more preferable subgroup of Lewis acids of compounds of formula (I): M is selected from lanthanides and an element of the groups 4, 11, 12, 13 and 14 of the IUPAC periodic table (1989) except the elements of the group 7 of the IUPAC periodic table (1989) and C, Si, Ge, TI, Pb, Tc, Hg and Cd, more preferably M is an element selected from group 4, 11, 12, 13 or 14 as defined above, more preferably M is selected from Ti (titanium), Zr (zirconium), Hf (hafnium), Sn (tin), Al (aluminium), Cu (copper), Zn (zinc) and B(boron), more preferably M is Ti, Al, Sn, Zn or Cu, most preferably M is Ti, Zn, Cu or Al, and, even more preferably from Ti or Al;

The term "optional" in the present invention means "may or may not be present", e.g. "optionally substituted" covers the possibilities that a substituent is present or is not present. The term "unsubstituted" naturally means that no substituent is present.

The below preferred subgroups of compounds of formula (I) are generalisable in any combination(s):
The position of the heteroatom in optionally substituted linear or branched saturated partially unsaturated hydrocarbyl group or in optionally substituted aromatic hydrocarbyl ring system or in the ring system formed by two or three or more L together with M is not limited. Accordingly, any hydrocarbyl may be linked to M via a heteroatom and/or the carbon atoms of any hydrocarbyl can be interrupted by one or more heteroatoms.

The optional substituents may be attached to a carbon or a hetero atom of the hydrocarbyl group. The optional substituents are selected independently from a functional group which is preferably selected from one or more of =O, -OH, NR¹R², wherein R¹ or R² are H or C1-C12 alkyl; - COOR⁴, wherein R⁴ is H or C1-C12 alkyl -CONR⁵, wherein R⁵ is H or C1-C12 alkyl; halogen, which is preferably F, Cl or Br, -OH; methyl or ethyl methanesulfonate; CF₃O₃- or from a hydrocarbyl with up to 20 carbon atoms in case of any ring system present in or formed by the hydrocarbyl. Any ring system present in L or formed by two or more L can be mono cyclic or polycyclic ring system. Polycyclic means fused ring systems and also ring systems formed by three L ligands linked to each other via X and M. In case of two or more L form a ring system, the ring can be saturated, partially unsaturated or aromatic, preferably saturated. The number of ring atoms in any ring system is preferably 5 to 14.

In the preferable subgroup of compounds of formula (I) the substituted or unsubstituted saturated or partially unsaturated hydrocarbyl group as L is more preferably
(i) an optionally substituted linear or branched, saturated or partially unsaturated hydrocarbyl group with up to 30 carbon atoms; more preferably linear or branched C₁-C₂₀ alkyl, linear or branched C₂-C₂₀ alkenyl or linear or branched C₂-C₂₀ alkynyl, more preferably linear or branched C₁-C₂₀ alkyl, linear or branched C₂-C₂₀ alkenyl;
(ii) an optionally substituted linear or branched, saturated or partially unsaturated hydrocarbyl group which bears a saturated or partially unsaturated cyclic hydrocarbyl moiety or an optionally substituted linear or branched, saturated or partially unsaturated hydrocarbyl group which bears an aromatic hydrocarbyl moiety; preferably an optionally substituted linear or branched, saturated or partially unsaturated hydrocarbyl group which bears a saturated or partially unsaturated cyclic hydrocarbyl moiety; or
(iii) an optionally substituted saturated or partially unsaturated cyclic hydrocarbyl group wherein one or more ring atoms are optionally a heteroatom selected from N, O, P, S or Si, preferably N, O or P.

Any optionally substituted cyclic hydrocarbyl group is preferably saturated and contains 5 to 7 ring atoms. Any optionally substituted aromatic ring system is preferably an optionally substituted phenyl, naphthyl or anthracene ring system.

More preferable subgroup is compounds of formula (I), wherein the substituted or unsubstituted saturated or partially unsaturated hydrocarbyl group as L is
(i) an optionally substituted linear or branched, saturated or partially unsaturated hydrocarbyl group; more preferably linear or branched C1-C20 alkyl, linear or branched C2-C20 alkenyl or linear or branched C2-C20 alkynyl, more preferably linear or branched C1-C20 alkyl or linear or branched C2-C20 alkenyl;
(ii) an optionally substituted linear or branched, saturated or partially unsaturated hydrocarbyl group which bears a saturated or partially unsaturated cyclic hydrocarbyl moiety or an optionally substituted linear or branched, saturated or partially unsaturated hydrocarbyl group which bears an optionally substituted aromatic hydrocarbyl moiety; preferably an optionally substituted linear or branched, saturated or partially unsaturated hydrocarbyl group which bears a saturated or partially unsaturated cyclic hydrocarbyl moiety; or
(iii) an optionally substituted saturated or partially unsaturated cyclic hydrocarbyl group wherein one or more ring atoms are optionally a heteroatom selected from N, O, P, S or Si (preferably N, O or P).

Even in more preferable subgroup of compounds of formula (I):
M is Ti, Zr, Hf, Sn, Cu, Zn or Al, preferably Ti, Sn, Zn, Cu or Al;
each L is a group comprising 1 to 30 carbon atoms and selected independently from optionally substituted hydrocarbyl with no hetero atoms; optionally substituted -O-hydrocarbyl group; -O-(C=O)-hydrocarbyl group; -O-(P=O)-hydrocarbyl group; or two or three L are -O-hydrocarbyl-linked to each other via a X atom, which is C or N atom, and form together with M a cyclic ring system; wherein each hydrocarbyl is independently as defined above; and
n is 4 in case of Ti, Zr, Hf or Sn; 3 in case of Al or B; and 2 in case of Cu or Zn.

In the most preferable Lewis acids as the crosslinking agent (B) is the subgroup of compounds of formula (I), wherein
M is Ti, Sn, or Al, and most preferably Ti or Al;
each L is a hydrocarbyl group selected independently form
- linear or branched C1-C20 alkyl optionally bearing one or two, preferably one, if present, substituent(s) as defined above, preferably linear or branched C1-C20 alkyl;
- -O-(linear or branched C1-C20 alkyl) optionally bearing one or two, preferably one, if present, substituent(s) as defined above, -O-(linear or branched C2-C20 alkenyl) optionally bearing one or two, preferably one, if present, substituent(s) as defined above, more preferably -O-(linear or branched C2-C20 alkenyl) optionally and preferably bearing one or two, preferably one, substituent which is preferably (=O);
- -O-(P=O)-(linear or branched C1-C20 alkyl) optionally bearing one or two, preferably one, if present, substituent(s) as defined above, -O-(P=O)-(linear or branched C2-C20 alkenyl) optionally bearing one or two, preferably one, if present, substituent(s) as defined above, more preferably O-(P=O)-(linear or branched C1-C20 alkyl); or
- three L are independently -O-ethylene- each linked to X which is N and the three L form together with M a polycyclic ring system; and
n is 4 in case of Ti, Zr, Hf or Sn, 3 in case of Al or B and 2 in case of Cu or Zn.

In the above preferable subgroup of the compounds of formula (I) in case three L are independently -O-ethylene- each linked to X which is N and the three L form together with M a polycyclic ring system, then m is preferably Ti, n is 4 and the remaining L is-O-( linear or branched (C1-12)alkyl), preferably -O-(linear or branched (C1-6)alkyl).

Examples for particularly preferred Lewis acids as the crosslinking agent (B) are (triethanolatoamine)Ti-O-R20 wherein R20 is a linear or branched (C1-12)alkyl), preferably a linear or branched (C1-6)alkyl), such as triethanolatoamine titanium isopropanolate (CAS number 74665-17-1). Further particularly preferred Lewis acids are zirconium tetrabutanolate (CAS number 1071-76-7), tris(diethylphosphinato)aluminium (CAS number 225789-38-8), Aluminum distearate (CAS number 300-92-5), Dioctyltindilaureate (CAS number 3648-18-81), titanium tristearate monoisopropanolate, zinc (II) acetylacetonate hydrate (CAS number 108503-47-5), copper (II) acetylacetonate (CAS number: 13395-16-9), titanium diacetylacetonate diisopropanolate (CAS number: 27858-32-8), Titanium(IV) butoxide (CAS number 5593-70-4), Titanium diisopropoxide bis(acetylacetonate) (CAS number 17927-72-9), Titanium isopropoxide (4) (CAS number 546-68-9); Tetrakis(2-ethylhexyl) orthotitanate (CAS number 1070-10-6), Tetrakis(triethanolaminato)zirconium(IV) (CAS number 101033-44-7), Zinc stearate (CAS number 557-05-1), Boron trifluoride ethylamine complex (CAS number 75-23-0). Most preferred Lewis acid is selected from triethanolatoamine titanium isopropanolate (CAS number 74665-17-1); tris(diethylphosphinato)aluminum (CAS number 225789-38-8 ); Titanium diisopropoxide bis(acetylacetonate) (CAS number 17927-72-9); Dioctyltindilaureate (CAS number 3648-18-81); Zinc (II) acetylacetonate hydrate (CAS number 108503-47-5) ; and - Copper(II) acetylacetonate CAS number 13395-16-9. Even most preferred Lewis acid is selected from triethanolatoamine titanium isopropanolate (CAS number 74665-17-1).

In yet another preferred embodiment each L is a group selected independently form
- linear or branched C1-C20 alkyl optionally bearing one or two, preferably one, if present, substituent(s) as defined above, preferably linear or branched C1-C20 alkyl;
- -O-(linear or branched C1-C20 alkyl) optionally bearing one or two, preferably one, if present, substituent(s) as defined above, -O-(linear or branched C2-C20 alkenyl) optionally bearing one or two, preferably one, if present, subsitutuent(s) as defined above, more preferably -O-(linear or branched C2-C20 alkenyl) optionally and preferably bearing one or two, preferably one, subsitutuent which is preferably (=O);
- -O-(P=O)-(linear or branched C1-C20 alkyl) optionally bearing one or two, preferably one, if present, substituent(s) as defined above, -O-(P=O)-(linear or branched C2-C20 alkenyl) optionally bearing one or two, preferably one, if present, substituent(s) as defined above, more preferably O-(P=O)-(linear or branched C1-C20 alkyl); or
- three L are independently -O-ethylene- each linked to X which is N and the three L form together with M a polycyclic ring system; and

As to Brönsted acids as the crosslinking agent (B), Brönsted acid is defined herein to be a compound which acts as a proton donor. Preferred Brönsted acids as the crosslinking agent (B) are sulphonic acids or any anhydrides or other derivatives thereof, more preferably an organic sulphonic acid, more preferably, a hydrocarbyl group substituted with at least one sulphonic acid substituent (including CF₃-SO₂-O-SO₂-CF₃ and CH₃-SO₂-CH₃) or an aromatic hydrocarbyl ring system bearing at least one sulphonic acid substituent and optionally further substituents, preferably bearing one or more hydrocarbyl substituent up to 50 carbon atoms. The aromatic hydrocarbyl ring system and hydrocarbyl are as defined above for Lewis acid. In the organic sulphonic acid, one, two or more sulphonic acid groups may be present. Suitable sulphonic acids as the crosslinking agent (B) are for examples thosed used as silane condensation catalysts and described e.g. in EP736065, EP1849816, EP1309631, EP1309632, US6441097B and US2008097038A.

The more preferred Brönsted acid as the crosslinking agent (B) is the aromatic organic sulphonic acid which comprises the structural element:

Ar(SO₃H)ₓ (II)

wherein Ar is an aryl group which may be substituted or non- substituted, and if substituted, then preferably with at least one hydrocarbyl group up to 50 carbon atoms, and x being at least 1, or a precursor of the sulphonic acid of formula (II) including an acid anhydride thereof or a sulphonic acid of formula (II) that has been provided with a hydrolysable protective group(s), e.g. an acetyl group that is removable by hydrolysis.

The sulphonic acid of formula (II) as the crosslinking agent (B) may comprise the structural unit according to formula (II) one or several times, e.g. two or three times (as a repeating unit (II)). For example, two structural units according to formula (II) may be linked to each other via a bridging group such as an alkylene group.

Preferably, in the sulphonic acid of formula (II) as the crosslinking agent (B) formula (II) x is 1, 2 or 3, and more preferably x is 1 or 2.

More preferably, compounds of formula (II), wherein Ar is a phenyl group, a naphthalene group or an aromatic group comprising three fused rings such as phenantrene and anthracene.

Furthermore preferably, the organic aromatic sulphonic acid of formula (II) as the more preferred Brönsted acid as crosslinking agent (B) has from 6 to 200 C-atoms, more preferably from 7 to 100 C-atoms.

Non-limiting examples of sulphonic acid compounds of formula (II) are p-toluene sulphonic acid, 1-naphtalene sulfonic acid, 2-naphtalene sulfonic acid, acetyl p-toluene sulfonate, acetylmethane-sulfonate, dodecyl benzene sulphonic acid, octadecanoyl-methanesulfonate and tetrapropyl benzene sulphonic acid; which each independently can be further substituted.

Even more preferable Brönsted acid as the crosslinking agent (B) is the sulphonic acid of formula (II), which is substituted, i.e. Ar is an aryl group which is substituted with at least one C1 to C30-hydrocarbyl group. In this more preferable subgroup of the sulphonic acid of formula (II), it is furthermore preferable that Ar is a phenyl group and x is at least one (i.e. phenyl is substituted with at least one -S(=O)₂OH), more preferably x is 1, 2 or 3, and more preferably x is 1 or 2.

The most preferred sulphonic acid as the crosslinking agent (B) is the sulphonic acid (II) which is a p-toluene sulphonic acid, i.e. 1-methyl, 4-S(=O)₂OH benzene, e.g. p-toluene sulphonic acid (CAS number 6192-52-5).

The most preferred crosslinking agent (B) is selected from Lewis acids.

As to crosslinking agent (B1), such agent is preferably selected from
(i) Lewis acids as defined above;
(ii) Brönsted acids different from carboxylic acids as defined above;
(iii) Amines comprising at least one amino group are preferably selected from a saturated aliphatic (mono, di or tri)amine with up to 50, preferably 1 to 20, carbon atoms; unsaturated aliphatic (mono, di or tri)amine with up to 50, preferably 1 to 20, carbon atoms; aromatic hydrocarbyl with up to 50, preferably 1 to 20, carbon atoms; preferably bearing at least two amino substituents; wherein the aliphatic or aromatic moiety may optionally contain one or more hetero atoms and wherein the aliphatic or aromatic amine may optionally contain further substituents; more preferably from aliphatic methylamine such as propylamine, stearylamine, preferably 1, 6-hexadiamine, 1,7-diaminoheptane, trioctamine, aniline, 2-ethylaniline, diethylenetriamine, triethylenetetramine and diethylamino propylamine; cycloaliphatic ring polyamine such as menthendiamine, isophorone diamine, bis(4-amino-3-methylcyclohexyl)methane and N-aminoethyl piperazine; aliphatic polyamine comprising aromatic ring such as meta xylenediamine, polyethyleneimine containing the second and tertiary amine nitrogen; aromatic polyamine such as methaphenylenediamine, methylenediamine and diaminodiphenyl sulfone; and modified polyamine of aliphatic polyamines, aliphatic polyamine comprising aromatic ring(s) and/or aromatic polyamines obtainable by well known modification methods, such as addition reaction with epoxy compound, Michael addition reaction with acrylonitrile acrylic ester, and Mannich reaction with a methylol compound, for example imidazole family, such as 2-methylimidazole, 2-ethyl-4 methylimidazole and 1-cyanoethyl-2 methylimidazole, and tri-2-ethylhexyl acid salt of tertiary amine such as tris-dimethylamino phenol, and tris-dimethylamino methyl phenol; more preferable amines comprise at least two amino groups of which non-limiting examples are 1,7-diaminoheptane, 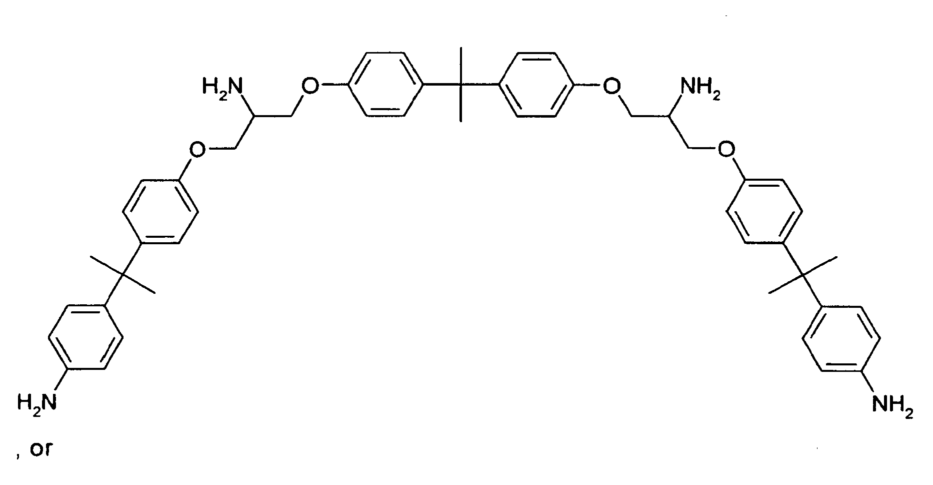 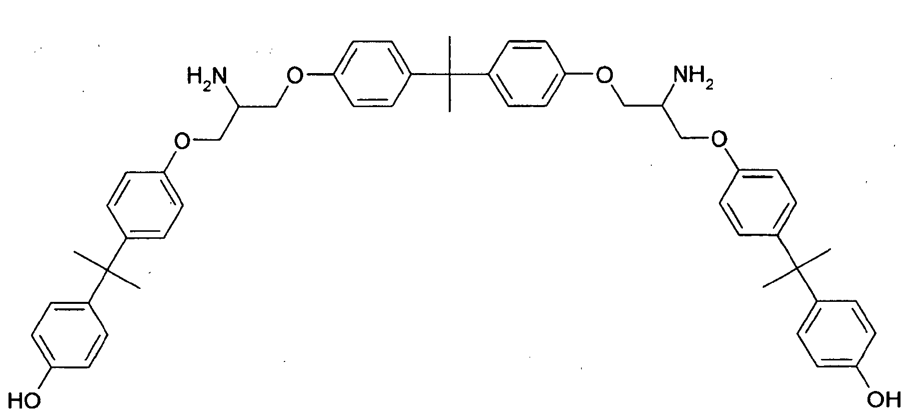 , the most preferred amine being 1,7-diaminoheptane;
(iv) Alcohols comprising at least two OH groups are preferably selected from aliphatic di- to hexa-alcohols or aromatic di- to hexa-alcohols, preferably from aliphatic di-, tri- or tetra-alcohols or aromatic di-, tri- or tetra-alcohols; more preferably such alcohols comprise 2 to 100, preferably 15 to 90, more preferably 15 to 90, most preferably 30 to 70, carbon atoms and may optionally comprise further heteroatoms which, if present, are preferably selected from N, S, O and/or P, more preferably from S, O or P even more preferably from S or O and most preferably the further heteroatom(s) are O;
(v) Anhydrides of carboxylic acids are preferably carboxylic acid anhydrides comprising at least one carboxylic acid anyhdride group and may contain further substituents, such as a carboxylic acid substituents, or further heteroatoms, such as defined above for (iv) alcohols; preferable carboxylic acid anhydrides are selected from aliphatic carboxylic acid anhydrides or saturated or partially unsaturated cyclic carboxylic acid anhydrides or aromatic carboxylic acid anhydrides; more preferable anhydrides of carboxylic acids are selected from anhydrides of saturated or partially unsaturated cyclic carboxylic acids containing up to 50, preferably 1 to 20, carbon atoms; the unsaturated aliphatic anhydride of carboxylic acid containing up to 50, preferably 1 to 20, carbon atoms; or aromatic carboxylic acid anhydrides containing up to 50, preferably 1 to 20, carbon atoms; or any mixtures thereof, more preferable anhydrides of carboxylic acids are selected from carboxilyc acids anhydrides derived from butyric acid, maleic acid, itaconic acid, fumarate acid, benzoic acid, vegetable oil such as palm oil, whale oil, fatty acid extracted from animal oil such as beef tallow oil, lauric acid, pulmitic acid, stearic acid, oleic acid, more preferably derived from compounds comprising two or more carboxyl groups, such as DL-malic acid, sebacic acid, succinic acid, adipic acid, thiodipropionic acid, citraconic acid, citric acid, phatalic acid; and most preferably from DL-malic acid and sebacic acid, most preferred carboxylic acid anhydride is 1,2,4-benzenetricarboxylic anhydride, CAS number 552-30-7;
(vi) Carboxylic acids comprising at least one carboxylic acid group are preferably selected from carboxcylic acids containing compounds; copolymers of olefin with a compound comprising acid group(s); or acid modified polymer, such as acid modified polyethylene, acid modified polypropylene and acid modified wax; more preferable carboxylic acids are selected from ethylene-acrylic acid copolymer, ethylene-methacrylic acid copolymer, ethylene-crotonic acid copolymer, ethylene-maleic anhydride copolymer, maleic anhydride acid modified polyethylene and pyrolysate of ethylene-ethyl acrylate copolymer.

Non-limiting examples of crosslinking agents (iii)-(vi) are given e.g. in JP06-116362.

The amount of croslinking agent (i) or (ii) as (B1) are preferably as defined for (B). Additionally, the amount of crosslinking agents (iii) to (vi) as (B1) is preferably 20 wt% or less, more preferably 0.5 to 15 wt%, more preferably 1.0 to 10 wt%, based on the amount of olefin polymer (A) and crosslinking agent (B1).

As to the olefin polymer (A) containing epoxy groups, the expression means an olefin polymer wherein a unit containing epoxy group is incorporated. Such unit is referred herein as an "epoxy-group-containing monomer unit" and means an unsaturated compound comprising an epoxy group, preferably vinyl group containing compound bearing an epoxy group. Such compounds can be used as comonomers for copolymerising epoxy-containing monomers units to the olefin polymer (A) or can be grafted to the olefin polymer (A), as well known in the polymer field. Grafting and copolymerizing of epoxy-group containing monomer units can be made according to or analogously to the methods described in the literature. The olefin polymers (A) containing epoxy groups as well as the epoxy-group-containing monomer units are very well known (mentioned e.g. in JP 06-116362 of Nippon Petrochem Co. LTD and WO 2010040964 of Arkema France) and commercially available. As preferable examples of epoxy-containing monomer units, e.g. aliphatic esters and glycidyl ethers such as an allyl glycidyl ether, a vinyl glycidyl ether, a maleate or itaconate of glycidyl, a (meth)glycidyl acrylate, and alicyclic esters and glycidyl ethers, such as a 2-cyclohexene-1 - glycidylether, a cyclohexene-4,5-diglycidyl carboxylate, a cyclohexene-4 glycidyl carboxylate, a 5-norbornene-2-methyl-2-glycidyl carboxylate and a endo cis-bicyclo (2,2,1) - 5-heptene-2,3-diglycidyl dicarboxylate, can be mentioned.

In the present invention the epoxy-containing monomer unit is preferably incorporated as a comonomer, i.e. by copolymerising an olefin monomer with the vinyl group containing comonomer bearing an epoxy group (=epoxy-group-containing monomer unit).

Most preferably, the epoxy-group-containing monomer units are glycidyl methacrylate comonomer units.

Preferably, the amount of epoxy-group-containing monomer units is at least 0.1 wt%, more preferably at least 0.3 wt%, more preferably at least 0.5 wt%, based on the amount of olefin polymer (A).

The content of epoxy-group-containing monomer units is preferably 10 wt% or less, preferably 7.0 wt%, more preferably 5.0 wt% or less and most preferably 3.0 wt% or less, based on the amount of olefin polymer (A).

The suitable olefin polymer (A) can be a homopolymer or a copolymer of an olefin, wherein the epoxy-group-containing monomer units are grafted as defined above, or a copolymer of an olefin at least the epoxy-group-containing monomer units as defined above. Preferred olefin polymer (A) is a copolymer of an olefin with at least the epoxy-group-containing monomer units as defined above, more preferably a copolymer of an olefin with at least glycidyl methacrylate comonomer units.

The olefin polymer (A) may comprise further comonomer(s) different from epoxy-group containing monomer units, and if present, then preferably polar comonomer(s) different from epoxy-group containing monomer units. In case olefin polymer (A) comprises polar comonomer(s), then the polar group containing monomer units are preferably present in an amount of at least 5.0 wt%, more preferably of at least 8 wt%, more preferably of at least 12 wt%, and most preferably of at least 15 wt% based on the amount of olefin polymer (A). In case olefin polymer (A) comprises polar comonomers, then, preferably, the polar group containing monomer units are present in an amount of not more than 50 wt%, more preferably not more than 45 wt% even more preferably of not more than 40 wt% and most preferably of not more than 35 wt% based on the amount of olefin polymer (A).

Preferably, the polar group containing monomer units are selected from acrylates or acetate comonomer units, preferably from alkyl (meth)acrylate or vinyl acetate comonomer units, preferably alkyl (meth)acrylate comonomer units.

In the present invention the term "alkyl (meth)acrylate comonomer units" encompasses alkyl acrylate comonomer units and/or alkyl methacrylate comonomer units.

The alkyl moiety in the alkyl(meth)acrylate comonomer units is preferably selected from C₁ to C₄-hydrocarbyls, whereby the C₃ or C₄ hydrocarbyl may be branched or linear.

Preferred olefin polymer (A) is polyethylene comprising epoxy-groups-containing monomer units, more preferably a copolymer of ethylene with at least the epoxy-group-containing monomer units as defined above, more preferably with at least glycidyl methacrylate comonomer units.

The copolymer of ethylene with at least the epoxy-group-containing monomer units as the preferable olefin polymer (A) is referred herein also shortly as ethylene/epoxy copolymer.

The ethylene/epoxy copolymer may further comprise further comonomer units.

It is preferred that the olefin polymer (A) is a copolymer of ethylene with at least epoxy-groups containing comonomer and optionally with other comonomer(s), different from epoxy-group containing monomer units, which other comonomer is preferably a polar comonomer different from epoxy-group containing monomer units, more preferably an acrylate or acetate group containing comonomer units. More preferably the olefin polymer (A) is selected from an ethylene copolymer with glycidyl methacrylate comonomer units or an ethylene copolymer with glycidyl methacrylate comonomer units and a polar comonomer selected from alkyl(meth)acrylate or a vinyl acetate comonomer units, even more preferably from an alkyl acrylate or a vinyl acetate comonomer units, even more preferably from a methyl acrylate, ethyl acrylate, butyl acrylate or vinyl acetate comonomer units, most preferably from a methyl acrylate, an ethyl acrylate or butyl acrylate comonomer units. Most preferably the olefin polymer (A) is selected from ethylene copolymer with glycidyl methacrylate comonomer units or ethylene copolymer with glycidyl methacrylate comonomer units and C1-C4 alkyl acrylate comonomer units, preferably methyl acrylate comonomer units. Moreover, the most preferred ethylene/epoxy copolymer for the (semiconductive) polyolefin composition is an ethylene copolymer with a polar comonomer units as defined above, preferably an ethylene-C1-C4 alkyl acrylate-glycidyl methacrylate copolymer, preferably ethylene-methyl acrylate-glycidyl methacrylate copolymer ,and glycidyl methacrylate. Moreover, the most preferred ethylene/epoxy copolymer for the polyolefin composition (b) is selected from ethylene copolymer with glycidyl methacrylate comonomer units or ethylene copolymer with methyl acrylate comonomer units and glycidyl methacrylate comonomer units , more preferably from an ethylene copolymer with glycidyl methacrylate comonomer units .

The ethylene polymer as the preferred olefin polymer (A) has a melt flow rate MFR₂, determined according to ISO 1133 under a load of 2.16 kg and a temperature of 190°C, of at least 0.1 g/10 min, more preferably of at least 0.5 g/10 min. More preferably such ethylene polymer has a melt flow rate MFR₂, determined according to ISO 1133 under a load of 2.16 kg and a temperature of 190°C, of 75 g/10 min or less, more preferably 60 g/10 min or less, even more preferably 55 g/10 min or less.

The ethylene polymer as the preferred olefin polymer (A) has a density of higher than 860 kg/m³. Preferably such ethylene polymer has a density of not higher than 960 kg/m³, and preferably of not higher than 955 kg/m³.

The preferred ethylene polymer as olefin polymer (A) is preferably low density ethylene polymer (LDPE) produced in a high pressure (HP) process in a tubular or autoclave reactor or in any combination thereof, both in case the epoxy-group-containing monomer units are grafted to a homopolymer or copolymer of ethylene after the production of the ethylene polymer as olefin polymer (A), and in case the epoxy-group-containing monomer units are copolymerised with ethylene and optionally with other comonomer(s). Hence, in case the epoxy-group containing monomer units are introduced by grafting the polymer prior to grafting may also be produced by this process.

Accordingly, the olefin polymer (A) of the invention is preferably a LDPE polymer, which is preferably produced at high pressure by free radical initiated polymerisation. The high pressure (HP) polymerisation is widely described in the literature and the adjustment of process conditions for further tailoring the other properties of the polyolefin depending on the desired end application is within the skills of a skilled person.

In a tubular reactor the polymerisation is effected at temperatures which typically range up to 400 °C, preferably from 80 to 350°C and pressure from 70 MPa, preferably 100 to 400 MPa, more preferably from 100 to 350 MPa. Pressure can be measured at least after compression stage and/or after the tubular reactor. Temperature can be measured at several points during all steps. Further details of the production of ethylene (co)polymers by high pressure radical polymerization can be found i.a. in the Encyclopedia of Polymer Science and Engineering, Vol. 6 (1986), pp 383-410 and Encyclopedia of Materials: Science and Technology, 2001 Elsevier Science Ltd.: "Polyethylene: High-pressure, R.Klimesch, D.Littmann and F.-O. Mähling pp. 7181-7184.

The autoclave process may, for example, be conducted in a stirred autoclave reactor. The stirred autoclave reactor is commonly divided into separate zones. The main flow pattern is from top zone(s) to bottom zone(s), but backmixing is allowed and sometimes desired. The stirrer is preferably designed to produce efficient mixing and flow patterns at a suitable speed of rotation selected by a person skilled in the art. The compressed mixture is commonly cooled and fed to one or more of the reactor zones. Radical initiators may also be injected at one or more zones along the reactor. As radical initiator, any compound or a mixture thereof that decomposes to radicals at an elevated temperature can be used. Usable radical initiators are commercially available. The polymerization pressure is typically 20 to 300, such as 20 to 250, MPa. The polymerization reaction is exothermic and after startup (at elevated temperature, e.g. from 80 to 150 °C to create the first radicals) the exothermic heat generated sustains the reaction. Temperature in each zone is controlled by the cooled incoming feed mixture. Suitable temperatures range from 80 to 300 °C. The process is well known to a skilled person and described e.g. in WO2010040964 of Arkema France, page 11, lines 23-32, and page 12, lines 1-8, or can be produced analogously as described e.g. in FR2498609, FR2569411 and FR2569412. Such autoclave polymerisation is preferred, when ethylene is copolymerized with the epoxy-group-containing monomer as defined above, preferably with glycidyl methacrylate comonomer, and optionally, and preferably, with other comonomer(s), preferably with a polar comonomer as defined above, more preferably alkyl (meth)acrylate, more preferably methyl acrylate, comonomer.

Moreover, when the polyolefin compostion does not contain a conductive filler, then the amount of olefin polymer (A) is at least 5 wt%, preferably at least 20 wt%, more preferably of at least 30 wt%, more preferably of at least 50 wt%, more preferably of at least 60 wt%, and up to 99 wt%, based on the total amount of the polyolefin composition.

Furthermore, where the polyolefin compostion comprises a conductive filler, then the olefin polymer (A) may be present in such semicoductive polyolefin compostion or such semiconductive polyolefin compostion (b), in each independently, in an amount of at least 5 wt%, preferably at least 10 wt%, more preferably of at least 20 wt%, based on the total amount of the polyolefin composition.Usually the olefin polymer (A) is present in the semiconductive polyolefin composition in an amount of of 90 wt% or less, preferably 85 wt% or less, more preferably from 80 wt% or less, even more preferably from 10 to 75 wt%, even more preferably from 20 to 70 wt%, still more preferably from 30 to 65 wt%, based on the total amount of the polyolefin composition.

As mentioned above, a semiconducitve layer of the cable of the invention, if present, may comprise a semiconductive polyolefin composition of the invention comprising additionally a conductive filler (semiconductive polyolefin composition). In such case the conductive filler is preferably a carbon black.

The amount of conductive filler is at least such that a semiconducting polyolefin composition is obtained. The amount of conductive filler can vary depending on the type of the used carbon black, the conductivity of the composition and desired end use.

Preferably, the volume resistivity of the composition, determined according to ISO 3915 (1981) at room temperature, is not higher than 100000 ohm*cm, preferably not higher than 1000 ohm*cm

Preferably, the conductive filler, preferably carbon black, is present in an amount of at least 10 wt%, preferably at least 15 wt%, even more preferably at least 20 wt. and most preferably at least 30 wt% based on the total amount of semiconductive polyolefin composition.

The conductive filler, preferably carbon black, is preferably present in an amount of 50 wt% or less, more preferably 45 wt% or less and most preferably 40 wt% or less based on the total amount of semiconductive polyolefin composition.

Any electrically conductive carbon black can be used as the preferred conductive filler. Preferably, the carbon black may have a nitrogen surface area (BET) of 5 to 400 m²/g determined according to ASTM D3037-93.

Further preferably the carbon black has one or more of the following properties: i) a primary particle size of at least 5 nm which is defined as the number average particle diameter according to ASTM D3849-95a procedure D, ii) iodine number of at least 10mg/g, preferably of from 10 to 200 mg/g, more preferably of from 10 to 100 mg/g, when determined according to ASTM D-1510-07; and/or iii) DBP (dibutyl phthalate) absorption number of from 60 to 300 cm³/100g, preferably of from 80 to 270, preferably 90 to 250 cm³/100g, when measured according to ASTM D 2414-06a. Preferably, the carbon black has the nitrogen surface area (BET) and the features (i), (ii) and (iii) as defined above.

Preferred carbon blacks are furnace carbon blacks and acetylene blacks, furnace carbon black is especially preferred, since less costly.

The polyolefin composition, preferably the preferred semiconductive polyolefin composition, according to the present invention may optionally comprise a polymer (C) which is an alpha-olefin homo- or copolymer comprising
- alpha-olefin monomer units (Q) selected from one C₂ to C₁₀ alpha-olefin; and
- optionally, monomer units (R) selected from one or more alpha-olefin(s) different from (Q).

In case of the polymer (C) is a homopolymer, then it consists of alpha-olefin monomer units (Q) whereby polyethylene, polypropylene or polybutylene are preferred.

Preferably, the polymer (C) is a copolymer. In this embodiment preferably one or more monomers (R) are present as comonomer in the polymer (C). Thus, the polymer (C) may also contain three or more different monomeric alpha-olefin units. Usually the polymer (C) does not contain more than five different monomeric units. For example, the polymer (C) may be a terpolymer of three alpha-olefins, such as an ethylene-propylene-alpha-olefin(e.g.butene) terpolymer or propylene-ethylene-alpha-olefin(e.g. butene) which may have elastomeric properties.

Alpha-olefin monomer units (Q) may preferably be contained in the polymer (C) in an amount of 50 wt% or more, more preferably in an amount of from 70 to 99 wt%, based on the amount of the polymer (C).

Preferably, the total amount of monomers (R) based on the amount of the polymer (C) is 50 wt% or less, still more preferably 30 wt%. It is further preferred that total amount of monomers (R) based on the amount of the polymer (C) is 1 wt% or more.

For clarification it shall be noted that in case one of monomer units (R) being ethylene, monomer units (Q) cannot be ethylene due to the above definition that (Q) and (R) are different.

Preferably, alpha-olefin monomer units (Q) are selected from one of C3-C10 alpha-olefins, more preferably from one of C3-C6 alpha-olefins, even more preferably from one of C3-C4alpha-olefins and most preferably are propylene monomers.

Alpha-olefin monomer units (R) are preferably selected from one or more of C2 and C4-C10 alpha-olefin monomer units, more preferably from one or more of C2 and C4-C6 alpha-olefin monomer units, even more preferably from C2 and/or C4 alpha-olefin monomer units and most preferably alpha-olefin monomer units (R) are at least 1-butene monomer units.

In a preferred polymer (C), monomer units (Q) are propylene monomer units.

In case the polymer (C) comprises two type of monomer (R), preferably these two comonomers are ethylene and 1-butene. Hence, preferably the polymer (C) is a propylene random copolymer or a heterophasic propylene copolymer. A heterophasic propylene copolymer comprises a propylene matrix phase, which is a homopolymer of propylene or random copolymer of propylene, and a rubber phase, such as a propylene-alpha-olefin rubber, e.g. a propylene-butene rubber, wherein the rubber phase is dispersed into the propylene matrix phase, as well known in the art.

Preferably, the polymer (C) comprises not more than two type of monomer (R), more preferably one comonomer (R), which is preferably 1-butene. A more preferable polymer (C) is a random copolymer of 1-butene.

The melting point of the polymer (C) is preferably 165 °C or less, more preferably is 150 °C or less, more preferably 140 °C or less, even more preferably 85 °C or less. The melting point of the polymer (C) should preferably not be lower than 50 °C.

Preferably, the polyolefin composition which is preferably a semiconductive polyolefin composition, comprises the polymer (C) in an amount of 1 wt% or more, more preferably of 3 wt% or more, based on the total amount of the polyolefin composition.

Furthermore, the polyolefin composition which is preferably a semiconductive polyolefin composition , preferably comprises the polymer (C) in an amount of 45 wt% or less, more preferably of 35 wt% or less, and most preferably of 25 wt% or less, even more preferably 15 wt% or less, in some embodiments even 10 wt% or less.

The melt flow rate MFR₂, measured at 230 °C according to ISO 1133, of the polymer (C) is preferably from 0.5 to 50 g/10 min, more preferably from 3 to 35 g/10min.

The alpha-olefin homo- or copolymer (C) may preferably have a density of 915 kg/cm³ or lower, more preferably of 900 kg/cm³ or lower.

A suitable catalyst for the polymerization of the alpha-olefin homo- or copolymer (C) is preferably a well known Ziegler-Natta catalyst or a single-site catalyst, preferably a stereospecific single-site catalyst for olefin polymerization. The polymerization is preferably carried out at temperature of 40 to 130°C and at a pressure from 5 to 100 bar. Suitable single-site catalysts are metallocene single-site catalysts as described for example in EP 1741725 A1 and EP 0943631 A1. Any conventional polymerization process can be used for producing the polymer (C), such as a solution process, slurry process, gas phase process, or any combinations thereof, which are well documented in the literature.

The polymer (C) preferably further contributes to the strippability (peelability) property, which is beneficial e.g. for the strippable outer semicon applications in wire and cable. Polymer (C) can also provide elastomeric properties to the final polyolefin composition, which is beneficial e.g in wire and cable applications.

The polyolefin composition, preferably the preferred semiconductive polyolefin composition, according to the present invention may optionally comprise an elastomeric component (D). Preferably the elastomeric component (D) comprises, or consist of, a nitrile rubber, preferably a nitrile-diene rubber, typically but not necessarily acrylonitrile-butadiene rubber (NBR). As the diene isoprene may also be used. As polymer (C), also the elastomer (D) preferably further contributes to the desirable strippability property.

The inventive composition may further comprise polymer (C) or polymer (D) or mixtures thereof.

The elastomeric component (D) may be contained in the polyolefin composition, preferably the preferred semiconductive polyolefin composition, in an amount of not more than 30 wt%, more preferably not more than 20 wt%, even more preferably not more than 10 wt%, based on the total amount of the polyolefin composition . In case the component (D) is present it is usually present in an amount of at least 0.5 wt% based on the total amount of the polyolefin composition.

If the elastomeric component (D) is contained in the polyolefin composition, preferably the preferred semiconductive polyolefin composition, , it is preferable to incorporate also a compabilitiser, a lubricant like a wax, stearate or silicone etc. and/or a parting agent (anti-caking agent) to improve the homogeneity and the free flowing properties of the polyolefin composition, preferably the preferred semiconductive polyolefin composition.

Naturally, in addition to crosslinking agent (B) the polyolefin composition may comprise further crosslinking agents for epoxy-crosslinking the olefin polymer (A), such as the other option of the crosslinking agent (B1), i.e.
(iii) amines comprising at least one amino group,
(iv) alcohols comprising at least two OH groups,
(v) anhydrides of carboxylic acids,
(vi) carboxylic acids comprising at least one carboxylic acid group,
or any mixtures thereof; as disclosed above for the crosslinking agent (B1).

Such crosslinking agents other than crosslinking agent (B) are described e.g. in the abovementioned JP06-116362. However, preferably such additional crosslinking agents are not present.

The polyolefin composition which optionally comprises a conductive filler or the polyolefin composition (b) may also comprise, and preferably comprises, further additive(s). As possible further additives, antioxidants, scorch retarders, crosslinking modulating (e.g. boosting or inhibiting) agents, stabilisers, processing aids, lubricants, compatibilizers, parting agents, anti-caking agents, flame retardant additives, acid scavengers, inorganic fillers, voltage stabilizers, additives for improving water tree resistance, or mixtures thereof can be mentioned.

More preferably the olefin polymer (A), the optional polymer (C), if present, or the optional elastomer (D), if present, are the only polymer component(s) present in the polyolefin composition. However, it is to be understood herein that the polyolefin composition may comprise further components other than the polyolefin (A), the optional polymer (C) and optional elastomer (D), such as the contuctive filler or optional additive(s), which may optionally be added in a mixture with a carrier polymer, i.e. in so called master batch.

The cable has preferably been subjected to conditions wherein crosslinking of at least the epoxy groups by the crosslinking agent (B) and the optional crosslinking agent (B1) has occurred.

Preferably, the crosslinking of at least the epoxy groups by the crosslinking agent (B) and the optional crosslinking agent (B1) is carried out at a temperature of at least 150°C, more preferably at least 200 °C. Usually the temperature is not higher than 360°C.

The crosslinking of the epoxy groups by the crosslinking agent (B) and the optional crosslinking agent (B1) is preferably carried out at a pressure of at least 10 bar, more preferably at least 20 bar. Usually the pressure is not higher than 100 bar.

Moreover the outer semiconductive layer can be strippable (peelable) or bonded (not peeled off), which terms have a well known meaning.

In the present invention "strippable" denotes that the semiconductive layer has a strip force of 8 kN/m or less, when measured according to "Strip force 90°" as described below under "Determination methods".

It is preferred that at least the outer semiconductive layer of the cable comprises the polyolefin composition of the invention as defined above and a conductive filler.

After crosslinking the crosslinked polyolefin composition of the invention provides very advantageous strippability properties to the outer semiconductive layer.

Accordingly, the preferred outer semiconductive layer of the cable comprising the polyolefin composition and a conductive filler is preferably strippable and, optionally, may further comprise a polymer (C) or an elastomer (D), or any mixtures thereof, as defined above.

Furthermore, in the abovementioned preferable embodiments where the insulation layer of the cable comprises the polyolefin composition (b), then the crosslinking agent (B1) is preferably different from Lewis acid or Brönsted acid different from carboxylic acids, more preferably is selected from (iii) an amine comprising at least one, preferably two, amino group(s), or (v) an anhydride of carboxylic acids, even more preferably from (v) anhydrides of carboxylic acids.

Moreover, the inner semiconductive layer of the cable may be non-crosslinkable, i.e. it is not crosslinked with any added crosslinking agent, or it can be crosslinkable. If the polymer composition of the inner semiconductive is crosslinkable, then it can be crosslinked using any means, such as well known crosslinking via well known free radical reaction, such as by using peroxide; via well known hydrolysis and subsequent condensation reaction in the presence of a silanolcondensation catalyst and H₂O for crosslinking hydrolysable silane groups present in the polymer composition; or via epoxy groups present in the polymer composition.

In the above preferable embodiment of the cable of the invention, wherein the insulation layer is also epoxy-crosslinked, the inner semiconductive layer of the cable is preferably not crosslinked and contains no crosslinking agent added for the purpose of crosslinking the inner semiconductive layer, or is also epoxy-crosslinkable and comprises a polyolefin compostion (b) as defined above.

The invention further provides a process for producing a cable comprising a conductor surrounded by at least one layer, wherein the at least one layer is formed from a polyolefin composition which comprises,
- an olefin polymer (A) comprising epoxy-groups; and
- at least one crosslinking agent (B) which accelerates the crosslinking reaction of epoxy-groups and which is selected from
   (i) Lewis acids as defined in claims 1 to 14,
   (ii) Brönsted acids different from carboxylic acids as defined in claims 1 to 14; or
   (iii) any mixtures thereof, and
- optionally a conductive filler, preferably carbon black, as defined above or in claims; and
optionally crosslinking the obtained cable.

In a preferable cable production process a power cable is produced comprising a conductor surrounded by at least an inner semiconductive layer, an insulation layer and an outer semiconductive layer, in that order, wherein the at least one of the inner semiconductive layer or the outer semiconductive layer, preferably at lest the outer semiconductive layer, is formed from the polyolefin composition which comprises,
- an olefin polymer (A) comprising epoxy-groups; and
- at least one crosslinking agent (B) which accelerates the crosslinking reaction of epoxy-groups and which is selected from
   (i) Lewis acids as defined in claims 1 to 14,
   (ii) Brönsted acids different from carboxylic acids as defined in claims 1 to 14; or
   (iii) any mixtures thereof, and
- a conductive fillers defined above or in claims, prefereably carbon black, as defined above or in claims;
   and, optionally, wherein one or more of the other layer(s) preferably at least the insulation layer, are formed from a polyolefin composition (b) comprising,
   - an olefin polymer (A) comprising epoxy-groups; and
   - at least one crosslinking agent (B1) which accelerates the crosslinking reaction of epoxy-groups, preferably at least one crosslinking agent (B1) which is selected from
      (i) Lewis acids,
      (ii) Brönsted acids different from carboxylic acids,
      (iii) amines comprising at least one amino group,
      (iv) alcohols comprising at least two OH groups,
      (v) anhydrides of carboxylic acids,
      (vi) carboxylic acids comprising at least one carboxylic acid group,
or any mixtures thereof, as defined above or in claims; and
optionally crosslinking the obtained cable.

In a more preferable cable production process a power cable is produced comprising a conductor surrounded by an inner semiconductive layer, an insulation layer, and an outer semiconductive layer, in that order, wherein the process comprises the steps of
(a1)
   - providing and mixing, preferably meltmixing in an extruder, a first semiconductive composition comprising a polymer, a conductive filler and optionally further component(s) for the inner semiconductive layer,
   - providing and mixing, preferably meltmixing in an extruder, a polymer composition for the insulation layer,
   - providing and mixing, preferably meltmixing in an extruder, a second semiconductive composition comprising a polymer, a conductive filler and optionally further component(s) for the outer semiconductive layer;
(b1)
   - applying on a conductor, preferably by coextrusion,
   - a meltmix of the first semiconductive composition obtained from step (a1) to form the inner semiconductive layer,
   - a meltmix of polymer composition obtained from step (a1) to form the insulation layer, and
   - a meltmix of the second semiconductive composition obtained from step (a1) to form the outer semiconductive layer;
      wherein at least the second semiconductive composition of the obtained outer semiconductive layer comprises, preferably consists of, a polyolefin composition comprising
   - an olefin polymer (A) comprising epoxy-groups;
   - at least one crosslinking agent (B) which accelerates the crosslinking reaction of epoxy-groups and which is selected from
      (i) Lewis acids as defined above,
      (ii) Brönsted acids different from carboxylic acids as defined above; or
      (iii) any mixtures thereof; and
   - a conductive filler, preferably a carbon black; as defined above or below; and
      wherein optionally and preferably the obtained insulation layer and optionally the obtained inner semiconductive layer comprise a polyolefin composition (b) comprising, preferably consisting of,
      - an olefin polymer (A) comprising epoxy-groups; and
      - at least one crosslinking agent (B1) which accelerates the crosslinking reaction of epoxy-groups, preferably at least one crosslinking agent (B1) which is selected from
         (i) Lewis acids,
         (ii) Brönsted acids different from carboxylic acids,
         (iii) amines comprising at least one amino group,
         (iv) alcohols comprising at least two OH groups,
         (v) anhydrides of carboxylic acids,
         (vi) carboxylic acids comprising at least one carboxylic acid group,
      or any mixtures thereof; as defined above or in claims; and
(c1) optionally, and preferably, crosslinking at least the obtained outer semiconductive layer in the presence of the crosslinking agent (B), optionally, and preferably, crosslinking the obtained insulation layer in the presence of the crosslinking agent (B1), and optionally crosslinking the obtained inner semiconductive layer, which optionally comprises the polyolefin compostion (b), as defined above.

Melt mixing means mixing above the melting temperature of at least the major polymer component(s) of the obtained mixture and is typically carried out in a temperature of at least 15°C above the melting or softening point of polymer component(s).

The term "(co)extrusion" means herein that in case of two or more layers, said layers can be extruded in separate steps, or at least two or all of said layers can be coextruded in a same extrusion step, as well known in the art. The term "(co)extrusion" means herein also that all or part of the layer(s) are formed simultaneously using one or more extrusion heads.

"Applied on a conductor" naturally means that the layer material is applied ((co)extruded) directly on a conductor or on a (polymeric) layer(s) around the conductor, depending on which layer is produced.

The polyolefin composition which optionally, and preferably, comprises a conductive filler (i.e. the preferred semiconductive polyolefin composition) or the polyolefin composition (b) can be made in form of pre-made pellets, which are then used in the cable production process and provided to the mixing step (a1) of the preferable process. The pre-made pellets of any of said compostions can be produced in a known manner e.g. 1) by compounding, preferably meltmixing, the olefin polymer (A), the optional conductive filler and the crosslinking agent (B) or (B1) and the obtained melt mixture is then pelletised in a well known pelletising device, or 2) pellets of the olefin polymer (A) and the optional conductive filler are first produced and then the crosslinking agent (B) or (B1) is impregnated on the obtained pellets. Alternatively, all or part, e.g. the crosslinking agent (B) or (B1), of the components of said compostions can be mixed together by the cable producer during the cable production process.

Preferably, any of said compostions can be provided to the cable production process and to (melt)mixing step (a1) in form of pre-made pellets as described above.Accordingly the crosslinking agent (B) is preferably already present in the obtained cable, preferably in the obtained semiconductive layer after the production of the cable. Any further components, such as the optional polymer (C) or elastomer (D) and/or additives which may optionally be added in a mixture with a carrier polymer, i.e. in so called master batch, can also be present in the pre-made pellets or added during the article, preferably cable, production process e.g. by the cable producer.

In the preferred process, the cable, which is preferably a power cable, is crosslinked in step (c1) for producing a crosslinked cable, more preferably a crosslinked crosslinked power cable.

The crosslinking is typically carried out at elevated temperatures, such as at least 150°C, more preferably at least 200 °C, and typically not higher than 360°C. Moreover, the pressure during the crosslinking is preferably at least 10 bar, more preferably at least 20 bar, and usually not higher than 100 bar.

Preferably, after crosslinking the hotset elongation of the layer is 175 % or less, more preferably 100 % or less and most preferably 50 % or less, when determined according to "Hot set elongation procedure" as described below under "Determination methods".

As well known the cable can optionally comprise further layers, e.g. layers surrounding the outer semiconductive layer, such as screen(s), a jacketing layer(s), other protective layer(s) or any combinations thereof.

The present invention is also directed to the use of a polyolefin compostion comprising, preferably consisting of,
- an olefin polymer (A) comprising epoxy-groups;
- at least one crosslinking agent (B) which accelerates the crosslinking reaction of epoxy-groups and which is selected from
   (i) Lewis acids,
   (ii) Brönsted acids different from carboxylic acids; or
   (iii) any mixtures thereof,
- optionally, and preferably, a conductive filler which is preferably a carbon black; as defined above or in claims;
for the production of a layer, preferably a semiconductive layer of a cable.

### Determination methods

Unless otherwise stated in the description or claims, the following methods were used to measure the properties defined generally above and in the claims and in the examples below. The samples were prepared according to given standards, unless otherwise stated.

**Wt%** means % by weight.

### Melt flow rate

The melt flow rate was determined according to ISO 1133 for propylene copolymers at 230°C, at a 2.16 kg load (MFR₂) and for ethylene copolymers at 190°C, at a 2.16 kg load (MFR₂).

### Density

Low density polyethylene (LDPE): The density was measured according to ISO 1183-2. The sample preparation was executed according to ISO 1872-2 Table 3 Q (compression moulding).

Low process polyethylene: Density of the polymer was measured according to ISO 1183 / 1872-2B.

### Melting temperature

The melting temperature was determined according to ASTM D 3418.

### Strip force 90°

Cable samples of 10 cm up to 13.5 cm of length and 10 mm width were cut in cross sectional direction from a test cable which had an inner semiconductive layer with a thickness of 0.8 ± 0.05 mm, an insulation layer with a thickness of 5.5 ± 0.1 mm, and an outer semiconductive layer with a thickness of 1 ± 0.1 mm. The test cables were prepared according to the method as described below under "(b) Production of test cables". The strip force test can be made for test cable wherein said sample is in non-cross-linked or cross-linked form. The samples were conditioned for 16 hours to 2 weeks at 23 °C and 50% relative humidity. The separation of the outer semiconductive layer from the insulation was initiated manually. The cable was fixed to Alwetron TCT 25 tensile testing instrument (commercially available from Alwetron). The manually separated part was clamped onto a wheel assembly which is fixed to a moveable jaw of said instrument. The movement of the tensile testing machine causes the separation of said semiconductive layer from said insulation layer to occur. The peeling was carried out using a peeling angle of 90° and peeling speed of 500 mm/min. The force required to peel said outer semiconductive layer from the insulation was recorded and the test was repeated at least six times for each test layer sample. The average force divided by the width (10 mm) of the sample was taken as said strip force and the given values (kN/m at 90 °) represent the average strip force of the test samples, obtained from at least six samples.

### Oil adsorption number, (Dibutyl phthalate)

DBP adsorption number of the carbon black samples was measured in accordance with ASTM D2414-06a.

### Iodine number

The iodine number of the carbon black samples was measured in accordance with ASTM D1510-07.

### Nitrogen Surface area (BET)

ASTMD3037-93

### Determination of comonomer content:

### Determination of polar comonomer content (FTIR)

### Comonomer content of polar comonomers

### (1) Polymers containing > 6 wt% polar comonomer units

Comonomer content (wt%) was determined in a known manner based on Fourier transform infrared spectroscopy (FTIR) determination calibrated with quantitative nuclear magnetic resonance (NMR) spectroscopy. For the FTIR measurement a film of 0.5-0.7 mm thickness was prepared. After the analysis with FTIR, base lines in absorbance mode were drawn for the peaks to be analysed. The absorbance peak for the comonomer was normalised with the absorbance peak of polyethylene (e.g. the peak height for butyl acrylate or ethyl acrylate at 3450 cm⁻¹ was divided with the peak height of polyethylene at 2020 cm⁻¹). The NMR spectroscopy calibration procedure was undertaken in the conventional manner as described in Spectroscopy of Polymers, J.L.Koenig American Chemical Society, Washington DC, 1992. For the determination of the content of methyl acrylate a 0.10 mm thick film sample was prepared. After the analysis the maximum absorbance for the peak for the methylacrylate at 3455 cm⁻¹ was subtracted with the absorbance value for the base line at 2475 cm⁻¹ (A_{methylacrylate} - A₂₄₇₅). Then the maximum absorbance peak for the polyethylene peak at 2660 cm⁻¹ was subtracted with the absorbance value for the base line at 2475 cm⁻¹ (A₂₆₆₀ -A₂₄₇₅). The ratio between (A_{methylacrylate}-A₂₄₇₅) and (A₂₆₆₀-A₂₄₇₅) was then calculated in the conventional manner, as described in Spectroscopy of Polymers, J.L.Koenig American Chemical Society, Washington DC, 1992 which is hereby incorporated by reference.

For the determination of the content of Glycidyl methacrylate a 0.10 mm thick film sample was prepared. After the analysis the maximum absorbance for the peak for the methylacrylate at 911 cm⁻¹ was subtracted with the absorbance value for the base line at 2475 cm⁻¹ (A_{Glycidyl methacrylate} - A₂₄₇₅). Then the maximum absorbance peak for the polyethylene peak at 2660 cm⁻¹ was subtracted with the absorbance value for the base line at 2475 cm⁻¹ (A₂₆₆₀ -A₂₄₇₅). The ratio between (A_{Glycidyl methylacrylate}-A₂₄₇₅) and (A₂₆₆₀-A₂₄₇₅) was then calculated in the conventional manner, as described in Spectroscopy of Polymers, J.L.Koenig American Chemical Society, Washington DC, 1992 which is hereby incorporated by reference.

### (2) Polymers containing 6 wt% or less polar comonomer units

Comonomer content (wt%) was determined in a known manner based on Fourier transform infrared spectroscopy (FTIR) determination calibrated with quantitative nuclear magnetic resonance (NMR) spectroscopy. For the FT-IR measurement a film of 0.05 to 0.12 mm thickness was prepared. After the analysis with FT-IR base lines in absorbance mode were drawn for the peaks to be analysed. The maximum absorbance for the peak for the comonomer (e.g. for methylacrylate at 1164 cm⁻¹ and butylacrylate at 1165 cm⁻¹) was subtracted with the absorbance value for the base line at 1850 cm⁻¹ (Aₚₒₗₐᵣ comonomer - A₁₈₅₀). Then the maximum absorbance peak for polyethylene peak at 2660 cm⁻¹ was subtracted with the absorbance value for the base line at 1850 cm⁻¹ (A₂₆₆₀ - A₁₈₅₀). The ratio between (A_{comonomer}-A₁₈₅₀) and (A₂₆₆₀-A₁₈₅₀) was then calculated. The NMR spectroscopy calibration procedure was undertaken in the conventional, as described in Spectroscopy of Polymers, J.L.Koenig American Chemical Society, Washington DC, 1992.

Quantification of comonomer content by NMR spectroscopy (polymer (C))

The comonomer content of polymer (C) was determined by quantitative nuclear magnetic resonance (NMR) spectroscopy after basic assignment (e.g. "NMR Spectra of Polymers and Polymer Additives", A. J. Brandolini and D. D. Hills, 2000, Marcel Dekker, Inc. New York which is hereby incorporated by reference). Experimental parameters were adjusted to ensure measurement of quantitative spectra for this specific task (e.g "200 and More NMR Experiments: A Practical Course", S. Berger and S. Braun, 2004, Wiley-VCH, Weinheim which is hereby incorporated by reference). Quantities were calculated using simple corrected ratios of the signal integrals of representative sites in a manner known in the art.

**Hotset elongation and hotset permanent deformation:** Hot set elongation and permanent deformation are determined on dumbbells prepared according to ISO-527-2-5A. Dumbbells were taken either by already crosslinked compressed plaques prepared as described below or extruded crosslinked cables prepared as described below under "(b) Production of test cables". The each test sample is specified in experimental part.

Compressed plaques are prepared as follows: Pellets of the test polyolefin composition were compression moulded using the following conditions: First, the pellets were melted at 120°C at around 20 bar for 1 minutes. Then the pressure was increased to 200 bar, and kept at the pressure and temperature for 6 min. Then material was cooling down to room temperature at rate of 15°C/min at 200 bars. The thickness of the plaque was around 1.8 mm.

Then plaques were crosslinked as follows: plaques were compression moulded at 300°C for 3 min and 30 secs at 20 bars. Then plaques were cooling down to room temperature at rate 50°C/min at 20 bars. This simulates the conditions in a cable vulcanisation line.

The hot set elongation as well as the permanent deformation were determined according to IEC 60811-2-1.on dumbbell samples as prepared as described above (either from the above mentioned crosslinked plaques or from the above mentioned outer semiconductive layer peeled from a test cable sample prepared as described below under "(b) Production of test cables" and the nature of the sample being specified in context. In the hot set test, a dumbbell of the tested material is equipped with a weight corresponding to 20 N/cm². This specimen is put into an oven at 200°C and after 15 minutes, the elongation is measured. Subsequently, the weight is removed and the sample is allowed to relax for 5 minutes. Then, the sample is taken out from the oven and is cooled down to room temperature. The permanent deformation is determined.

### Volume resistivity

The volume resistivity of the semiconductive material is measured on crosslinked polyethylene cables according to ISO 3915 (1981). Cable specimens cut from the produced test cable have a length of 13.5 cm are conditioned at 1 atm and 60 +- 2 °C for 5 +- 0.5 hours before measurement. The resistance of the outer semiconductive layer is measured using a four- terminal system using metal wires pressed against the semiconductive layer. To measure the resistance of the inner semiconductive layer, it is necessary to cut the cable in two halves, removing the metallic conductor. The resistance between the conductive silver paste applied onto the specimen ends is then used to determine the volume resistivity of the inner semiconductive layer. The measurements were carried out at room temperature and 90 °C. The same procedure is used to determine the volume resistivity of compositions that have not yet been cross-linked.

### Volatility of By-products

The Thermogravic analysis measurements were run ramping from 25°C to 400°C (10°C/min).

Thermogravic analysis instrument used was TGA Q5000 V 3.8 Build 256. Samples used were pellets of the test polymer composition, inventive compositions or reference compositions, as specified in experimental part and compounded as described below under "2. Materials, (a) compounding of the compositions". The amount of the used test pellet samples were weighted between 5 and 15 mg. Then instrument was run using the following program under nitrogen:
Starting temperature was between 30-40°C for 10-30 min then ramping up at 10°C /min up to 400°C. The lost weight after the above test run method was the indication of the volatiles.

### 2. Materials

The ingredients given in the following were used for the preparation of the polyolefin compositions. All amounts are given in weight percent.

### (a) compounding of the compositions

The components of the compositions were those of the polyolefin composition under test. The test polyolefin compositions used in the present experimental part were polyolefin compositions of inventive examples and the polyolefin compositions of reference examples as listed in the tables below.

The composition were compounded in a Buss mixer. Accordingly, the compounding operations were made in a 46 mm continuous Buss mixer. The tested polymer component(s) and croslinking agent and additives, if any, were charged to the first hopper of the mixer. The temperature in the first hopper was 140-190°C. The carbon black was charged into the subsequent second hopper and the mixing was continued at 170-190°C followed by pelletising.

### (b) Production of test cables

The test cables were prepared using a so-called "1 plus 2 extruder setup", in a Maillefer extruder, supplied by Maillefer. Thus, the inner semiconductive layer was extruded on the conductor first in a separate extruder head, and then the insulation and outer semiconductive layer are jointly extruded together on the inner semiconductive in a double extruder head. The inner and outer semiconductive extruder screw had a diameter of 45 mm/24D and the insulation screw had a diameter of 60 mm/24D.

The compositions used for the inventive and reference test plaques and cables are given in the below tables.

In all inventive and reference test cables the same polyethylene polymer composition containing carbon black and peroxide as the crosslinking agent was used as the inner semiconductive layer of the test cables. The used polymer composition is sold under the name LE0595 (Density 1135 kg/m³) supplied by Borealis

The same polyethylene polymer composition containing peroxide as the crosslinking agent was used in the insulation layer of the inventive test cables except in the inventive insulation composition IE14 (table 5) and reference test cables given in table 2. The polymer composition is sold under the name LE4201R (Density (Base Resin) 922 kg/m³, Melt Flow Rate (190 °C/2,16 kg) 2 g/10min) supplied by Borealis

The inventive compositions IE1-IE13 containing the conductive filler and IE14 containing no conductive filler, as well as reference compositions, were compounded according to procedure as described under "2. Materials, (a) compounding the compositions".

The inventive and reference cables of table 2 were produced at speed of 1.6 m/ min. 2 zones ("zone 1" and "zone 2") of 3 meter and the formed cable was then treated under nitrogen in a subsequent vulcanization tube with the following temperatures: "zone 1" 400 °C and "zone 2" 375 °C wherein the crosslinking of the inner semiconductive layer, the insulation layer and the outer semiconductive layer was completed. Then cables were cooled down to ambient temperature by using water. Finally cables were stored for 24 to 48 hours before analysis.

The inventive cable of table 5 was produced as described above for cables of table 2, except that temperature at the vulcanization tube was turned off for this case and the cable was crosslinked in a separated oven set up between 200-230 °C.

Finally all test cables were cooled down at room temperature for 1 h and stored for 24 to 48 hours before analysis.

Each test cable both in table 2 and 5 had the following properties:

| | Test cable construction |
|---|---|
| Conductor diameter | 50 mm² Al |
| Inner semiconductive layer, thickness | 0.8 ± 0.05 mm |
| Insulation layer, thickness | 5.5 ± 0.1 mm |
| Outer semiconductive layer, thickness | 1 ± 0.1 mm |

Details of the components of the used to prepare the inventive polyolefin compositions are given in the following.

Raw materials used as components of the inventive polymer compositions were commercially available or are conventional and can be produced by a skilled person using a conventional, well documented processes.
- Tafmer XM 5070MP, which is a commercial propylene/butylene copolymer having an MFR₂ (2.16 kg/230 °C) of 7 g/10 min and a melting point of 75°C. Supplied by Mitsui.
- GMA: conventional Ethylene-methyl acrylate-glycidyl methacrylate terpolymer (GMA) produced in a high pressure process in an autoclave reactor having a methyl acrylate content of 23.4 wt% and a glycidyl methacrylate content of 1 wt%, an MFR₂ (2.16 kg/190 °C) of 50 g/10 min and a melting point of 68.4 °C. For the preparation, reference is made to the above disclosure part, wherein the polymerization in autoclave process is described in relation to olefin polymer (A).
- Lotader AX8920, which is an ethylene-methyl acrylate-glycidyl methacrylate terpolymer having a methyl acrylate content of 28 wt% and a glycidyl methacrylate content of 1 wt%, an MFR₂ (2.16 kg/190 °C) of 6 g/10 min, a density of 950 kg/m³ and a melting point of 63°C. Supplied by Arkema.
- Lotader AX8900, which is an ethylene-methyl acrylate-glycidyl methacrylate terpolymer having a methyl acrylate content of 24 wt% and a glycidyl methacrylate content of 8 wt%, an MFR₂ (2.16 kg/190 °C) of 6 g/10 min, a density of 950 kg/m³ and a melting point of 60°C. Supplied by Arkema.
- Lotader AX 8840 which is a random polymer of ethylene-glycidyl methacrylate having a glycidyl methacrylate content of 8 wt%, an MFR₂ (2.16 kg/190 °C) of 5 g/10 min, a density of 940 kg/m³ and a melting point of 106°C. Supplied by Arkema.
- Perbunan 3435 supplied from Lanxess which is nitrile rubber with an acrylonitrile content of 34% and Mooney viscosity (ML(1+4)100°C) is 35
- Conventional N550 furnace carbon black which is commercially available (N550 is a carbon black classification according to ASTM D1765-D), having the following properties:

| **Oil adsorp no. (ml/100g)** | **Iodine nr. (mg/g)** |
|---|---|
| **ASTMD2414-06A** | **ASTM D1510-07** |
| **115-127** | **10-80** |

- TMQ is TRIMETHYLQUINONE (CAS No. 935-92-2)
- ZINC STEARATE as process aid
- POX which is a conventional peroxide,
- Tyzor TE which is triethanolatoamine titanium isopropanolate (CAS number 74665-17-1) supplied by DuPont
- TYZOR NBZ which is zirconium tetrabutanolate (CAS number 1071-76-7) supplied by DuPont
- Exolit OP1230 which is tris(diethylphosphinato)aluminum (CAS number 225789-38-8) supplied by Clariant
- Aluminum distearate (CAS number 300-92-5)
- Dioctyltindilaureate (CAS number 3648-18-811)
- Titanium diisopropoxide bis(acetylacetonate) (CAS number 17927-72-9)
- Aradur 3380-1 (1,2,4-Benzenetricarboxylic anhydride (CAS number 552-30-7) distributed by Huntsman
- p-toluenesulfonic acid (CAS number 6192-52-5)
- Zinc (II) acetylacetonate hydrate (CAS number 108503-47-5)
- Copper(II) acetylacetonate (CAS number 13395-16-9)

**Table 1 Crosslinking parameters for crosslinked plaques, IE1- IE10= inventive example, Refer 1= reference example**

| | Structure of the crosslinking agent | Type of crosslinki ng agent | IE1 | IE2 | IE3 | IE4 | IE5 | IE6 | IE7 | IE8 | IE9 | IE10 | Refer 1 |
|---|---|---|---|---|---|---|---|---|---|---|---|---|---|
| Based on the total amount of the composition, wt% | | | | | | | | | | | | | |
| GMA | | | 55.6 | 55.4 | 55.6 | 55.4 | 54.9 | | 54.9 | 54.9 | 54.9 | 48.8 | |
| PERBUNAN 3435 | | | | | | | | | | | | 10 | |
| TAFMER XM5070 | | | 5 | 5 | 5 | 5 | 5 | 5 | 5 | 5 | 5 | - | |
| N-550 | | | 38.5 | 38.5 | 38.5 | 38.5 | 38.5 | 38.5 | 38.5 | 38.5 | 38.5 | 38.5 | |
| TMQ | | | 0.6 | 0.6 | 0.6 | 0.6 | 0.6 | 0.6 | 0.6 | 0.6 | 0.6 | 0.6 | |
| Lotader AX8900 | | | | | | | | 54.9 | | | | | |
| POX | | | | | | | | | | | | | 0.9 |
| ZINC STEARATE | | | | | | | | | | | | 1.8 | |
| Tyzor TE | 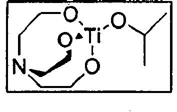 | Lewis acid (Ti) | 0.3 | | | | | | | | | 0.3 | |
| Titanium diisopropoxide bis(acetylacetonate ) | 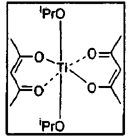 | Lewis acid (Ti) | | 0.5 | | | | | | | | | |
| Dioctyltin dilaurate | 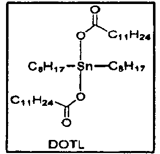 | Lewis acid (Sn) | | | 0.3 | | | | | | | | |
| Exolit OP1230 | 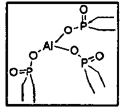 | Lewis acid (Al) | | | | 0.5 | | | | | | | |
| Aradur 3380-1 | 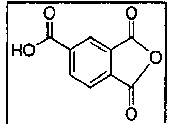 | anhydride | | | | | 1 | | | | | | |
| p-Toluene sulfonic acid | 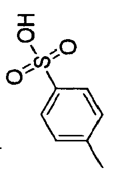 | Bronsted acid | | | | | | 1 | | | | | |
| zinc (II) acetylacetonate hydrate | 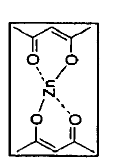 | Lewis acid (Zn) | | | | | | | 1 | | | | |
| Copper (II) acetylacetonate | 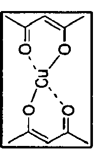 | Lewis acid (Cu) | | | | | | | | 1 | | | |
| 1,7-Diaminoheptane | 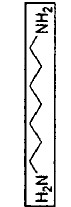 | Amine | | | | | | | | | 1 | | |
| crosslinking parameters measured from crosslinked test plaques | | | | | | | | | | | | | |
| Hotset Elongation [%] | | | 7 | 18 | 11 | 17 | 25 | 5 | 26 | 27 | 13 | 14 | 26 |
| Hotset Permanent deformation [%] | | | 0 | 0 | 0 | 0 | 3 | 0 | 4 | 5 | 0 | 1 | 0 |

Table 1 shows that using the crosslinking agent of the invention (inventive examples) instead of peroxide crosslinking agent (reference examples) provides at least comparable or even improved crosslinking properties. Furthermore crosslinking parameters of inventive examples are within the specifications given by the standards: IEC 60502-2) 2005; CENELEC **HD 620 2007** and ANSI/ICEA CS6-96. Crosslinking parameters were obtained on plaques prepared as described above for "Hotset elongation and hotset permanent deformation" method under "Determination methods".

**Table 2 Parameters for crosslinked semiconductive layer material of 20 kv test cables. The inner semiconductive and the insulation materials, as well as the cable production is described above under 2. Materials, (b) Production of test cables**

| | IE1 | IE11 | IE10 | Refer 1 | Refer 2 IE1 without crosslink. agent |
|---|---|---|---|---|---|
| | | | | | |
| | wt. % | wt. % | wt. % | wt. % | wt. % |
| GMA | 55.6 | 60.6 | 48.8 | | 55.9 |
| TAFMER XM5070 | 5 | | | | 5 |
| N-550 | 38.5 | 38.5 | 38.5 | | 38.5 |
| TMQ | 0.6 | 0.6 | 0.6 | | 0.6 |
| Tyzor TE | 0.3 | 0.3 | 0.3 | | - |
| POX | | | | 0.9 | |
| PERBUNAN 3435 | | | 10 | | |
| ZINC STEARATE | | | 1.8 | | |
| Sum of outer semicon layer | 100 | 100 | 100 | | 100 |
| **Cable properties** | | | | | |
| **Crosslinking parameters** | | | | | |
| Hotset Elongation [%] | 17 | 20 | | 25.9 | Broke |
| Permanent Deformation [%] | 1 | 0 | | 0 | n/a |
| **Semiconductive parameters** | | | | | |
| Semiconductivity VR [ohm*cm] @ room temperture | <1000 | <1000 | | <1000 | <1000 |
| **strippability parameters** | | | | | |
| Strip Force 90° [kN/m] | 1.3 | 1.9 | 1.5 | 3.6 | 1,8 |

In Table 2 inventive and reference compositions were used for making the outer semiconductive layer of 20KV test cables are exactly the same as in Table 1. Refer 2 is IE1, but does not contain any crosslinking agent. Inventive and reference compositions (also refer 2 without crosslinking agent) were all subjected to crosslinking conditions as described above for "(b) Production of test cables under "Determination methods".

Examples show that outer semiconductive layer of inventive examples were fully crosslinked and meet standards requirements. In addition IE11 shows the good crosslinking properties also in the absence of polymer (C) component (Tafmer) or (D) component (Perbunan). Refer 2 shows no crosslinking activity meaning that a catalyst or crosslinking agent is necessary in order to crosslinking reaction to occur. Furthermore all cables on Table 2 have semiconductive properties shown as volume resistivity (VR) property.

Moreover, Strip forces measured for a non peroxide crosslinked inventive semiconductive examples show much better strippability parameters than peroxide crosslinked semiconductive reference (refer 1).

**Table 3 Volatiles parameters for outer semicon compositions**

| | IE12 | IE13 | Refer1 |
|---|---|---|---|
| | **wt%** | **wt%** | **wt%** |
| LOTADER AX8900 | 55.6 | | |
| LOTADER AX8920 | | 55.6 | |
| N-550 | 38.5 | 38.5 | |
| Tyzor TE | 0.3 | 0.3 | - |
| TAFMER XM5070 | 5 | 5 | |
| TMQ | 0.6 | 0.6 | |
| POX | | | 0.9 |
| **Volatility of By-products** | | | |
| Termogravimetry Analysis (TGA), Weight (%) | 96.3 | 97.2 | 85.1 |

As can be seen from table 3, the outer semiconductive compositions of Inventive examples (IE) show clearly better thermostability than peroxide crosslinked outer semiconductive composition refer 1, which is demonstrated by lesser amounts of volatiles of IE's measured by thermogravimetry analysis (TGA) as described above for "Volatility of By-products" under "Determination methods".

Table 4 and table 5 below show that the inventive polyolefin compositions comprising epoxy-crosslinking agent (B) or (B1), but without carbon black, can also be used in a layer of a cable. Additionally, the inventive polyolefin composition without carbon black can be used in an insulation layer of a cable. Moreover, such insulaton layer can be combined with a semiconductive cable layer(s) containing an inventive polyolefin composition, see table 5. The crosslinking parameters in below table 5 show that the inventive test cable is fully crosslinked also when the outer semiconductive layer and also the insulation comprise the the epoxy-crosslinking system of the invention.

**Table 4: Test plaque of Insulation composition (no carbon black)**

| | IE14 |
|---|---|
| Lotader AX 8840 | 94.5 |
| Aradur 3380-1 (anhydride) | 5.5 |
| | |
| **Crosslinking parameters** | |
| Hotset Elongation [%] | 21 |
| Permanent Deformation [%] | 0 |

**Table 5 Inventive Cable Example.**

| **Cable** | **Inventive cable** |
|---|---|
| **Outersemicon composition** | **IE1** |
| GMA | 55.6 |
| TAFMER XM5070 | 5 |
| N-550 | 38.5 |
| TMQ | 0.6 |
| Tyzor TE (Lewis acid) | 0,3 |
| | |
| **Crosslinking parameters** | |
| Hotset Elongation [%] | 19 |
| Permanent Deformation [%] | 1 |
| | |
| **Insulation composition** | **IE14** |
| | |
| Lotader AX 8840 | 94.5 |
| Aradur 3380-1 (anhydride) | 5.5 |
| | |
| **Crosslinking parameters** | |
| Hotset Elongation [%] | 69 |
| Permanent Deformation [%] | 0 |

## Claims

1. A cable, comprising a conductor surrounded by one or more layer(s), wherein at least one layer comprises a polyolefin composition comprising,
- an olefin polymer (A) comprising epoxy-groups;
- at least one crosslinking agent (B) which accelerates the crosslinking reaction of epoxy-groups and which is selected from (i) Lewis acids, which are compounds of the following formula (I)
M^{+m}Lₙ (I),
wherein
- M is an element selected from lanthanides or an element of groups 2 to 14 of the IUPAC periodic table (1989) except the elements of the group 7 of the IUPAC periodic table (1989) and Be, C, Si, Ge, TI, Pb, Tc, Hg and Cd;
- each L is the same or different and is a ligand linked to M and is a substituted or unsubstituted saturated or partially unsaturated hydrocarbyl group selected from
(i) an optionally substituted linear or branched, saturated or partially unsaturated hydrocarbyl group with up to 30 carbon atoms; more preferably linear or branched C₁-C₂₀ alkyl; linear or branched C₂-C₂₀ alkenyl; or linear or branched C₂-C₂₀ alkynyl, more preferably linear or branched C₁-C₂₀ alkyl; or linear or branched C₂-C₂₀ alkenyl;
(ii) an optionally substituted linear or branched, saturated or partially unsaturated hydrocarbyl group which bears a saturated or partially unsaturated cyclic hydrocarbyl moiety or an optionally substituted linear or branched, saturated or partially unsaturated hydrocarbyl group which bears an aromatic hydrocarbyl moiety; preferably an optionally substituted linear or branched, saturated or partially unsaturated hydrocarbyl group which bears a saturated or partially unsaturated cyclic hydrocarbyl moiety; or
(iii) an optionally substituted saturated or partially unsaturated cyclic hydrocarbyl group wherein one or more ring atoms are optionally a heteroatom selected from N, O, P, S or Si, preferably N, O or P;
and
m is 1 to 4, and n is 1 to 4, with the proviso that m-n is 0;
or the Lewis acid is selected from a subgroup of compounds of formula (I),
M^{+m}Lₙ (I),
wherein
M is Ti, Zr, Hf ,Sn, Cu, Zn or Al, preferably Ti, Sn, Zn, Cu or Al; each L is a group comprising 1 to 30 carbon atoms and selected independently from
- optionally substituted hydrocarbyl with no heteroatoms;
- optionally substituted -O-hydrocarbyl group;
- -O-(C=O)-hydrocarbyl group;
- -O-(P=O)-hydrocarbyl group; or
- two or three L are -O-hydrocarbyl- linked to each other via a X atom, which is C or N atom, and form together with M a cyclic ring system; wherein each hydrocarbyl is independently as defined above; and
n is 4 in case of Ti, Zr, Hf or Sn; 3 in case of Al or B; and 2 in case of Cu or Zn
(ii) Brönsted acids different from carboxylic acids which is an aromatic organic sulphonic acid comprising the structural element:
Ar(SO₃H)ₓ (II)
wherein
Ar is an aryl group which may be substituted or non- substituted, and if substituted, then preferably with at least one hydrocarbyl group up to 50 carbon atoms, and x being at least 1, or a precursor of the sulphonic acid of formula (II) including an acid anhydride thereof or a sulphonic acid of formula (II) that has been provided with a hydrolysable protective group(s), e.g. an acetyl group that is removable by hydrolysis; or
(iii) any mixtures thereof, and
- optionally a conductive filler.

2. The cable according to claim 1, which is a power cable comprising a conductor surrounded by at least an inner semiconductive layer, an insulation layer and an outer semiconductive layer, in that order, wherein at least one layer comprises, preferably consists of a polyolefin composition comprising
- an olefin polymer (A) comprising epoxy-groups;
- at least one crosslinking agent (B) which accelerates the crosslinking reaction of epoxy-groups and which is selected from
(i) Lewis acids as defined in claim 1,
(ii) Brönsted acids different from carboxylic acids as defined in claim 1; or
(iii) any mixtures thereof, and
- optionally a conductive filler, preferably carbon black.

3. The cable according to claim 1 or 2, wherein one or more other layer(s) comprises a polyolefin composition (b) comprising
- an olefin polymer (A) comprising epoxy-groups; and
- at least one crosslinking agent (B1) which accelerates the crosslinking reaction of epoxy-groups, preferably at least one crosslinking agent (B1) which is selected from
(i) Lewis acids,
(ii) Brönsted acids different from carboxylic acids,
(iii) amines comprising at least one amino group,
(iv) alcohols comprising at least two OH groups,
(v) anhydrides of carboxylic acids,
(vi) carboxylic acids comprising at least one carboxylic acid group,
or any mixtures thereof.

4. The cable according to any of the preceding claims, which is a power cable comprising a conductor surrounded by at least an inner semiconductive layer, an insulation layer and an outer semiconductive layer, in that order, wherein the at least one of the inner semiconductive layer and the outer semiconductive layer comprises, preferably consists of, a polyolefin composition comprising,
- an olefin polymer (A) comprising epoxy-groups; and
- at least one crosslinking agent (B) which accelerates the crosslinking reaction of epoxy-groups and which is selected from
(i) Lewis acids as defined in claim 1,
(ii) Brönsted acids different from carboxylic acids as defined in claim 1; or
(iii) any mixtures thereof; and
a conductive filler, preferably carbon black.

5. The cable according to any of the preceding claims, which is a power cable comprising a conductor surrounded by at least an inner semiconductive layer, an insulation layer and an outer semiconductive layer, in that order, wherein at least the outer semiconductive layer, comprises, preferably consists of, a semiconductive polyolefin composition which comprises,
- an olefin polymer (A) comprising epoxy-groups;
- at least one crosslinking agent (B) which accelerates the crosslinking reaction of epoxy-groups and which is selected from
(i) Lewis acids as defined in claim 1,
(ii) Brönsted acids different from carboxylic acids as defined in claim 1; or
(iii) any mixtures thereof, and
a conductive filler, preferably carbon black;
and, optionally, wherein one or more of the other layer(s) which is preferably at least the insulation layer, comprises, preferably consists of, a polyolefin composition (b) comprising
- an olefin polymer (A) comprising epoxy-groups; and
- at least one crosslinking agent (B1) which accelerates the crosslinking reaction of epoxy-groups, preferably crosslinking agent (B1) which is selected from
(i) Lewis acids,
(ii) Brönsted acids different from carboxylic acids,
(iii) amines comprising at least one amino group,
(iv) alcohols comprising at least two OH groups,
(v) anhydrides of carboxylic acids,
(vi) carboxylic acids comprising at least one carboxylic acid group,
or any mixtures thereof.

6. The cable according to any of the preceding claims, wherein the Lewis acids are compounds of a subgroup of Lewis acids of compounds of formula (I), wherein
- M is selected from lanthanides and an element of the groups 4, 11, 12, 13 and 14 of the IUPAC periodic table (1989) except the elements of the group 7 of the IUPAC periodic table (1989) and C, Si, Ge, Tl, Pb, Tc, Hg and Cd, more preferably M is an element selected from group 4, 11, 12, 13 or 14 as defined above, more preferably M is selected from Ti (titanium), Zr (zirconium), Hf (hafnium), Sn (tin), Al (aluminium), Cu (copper), Zn (zinc) and B(boron).

7. The cable according to any of the preceding claims, wherein the Lewis acid is selected from a subgroup of the compounds of formula (I), wherein said substituted or unsubstituted saturated or partially unsaturated hydrocarbyl group as L is more preferably
(i) an optionally substituted linear or branched, saturated or partially unsaturated hydrocarbyl group; more preferably linear or branched C₁-C₂₀ alkyl; linear or branched C₂-C₂₀ alkenyl; or linear or branched C₂-C₂₀ alkynyl, more preferably linear or branched C₁-C₂₀ alkyl; or linear or branched C₂-C₂₀ alkenyl;
(ii) an optionally substituted linear or branched, saturated or partially unsaturated hydrocarbyl group which bears a saturated or partially unsaturated cyclic hydrocarbyl moiety or an optionally substituted linear or branched, saturated or partially unsaturated hydrocarbyl group which bears an optionally substituted aromatic hydrocarbyl moiety, preferably an optionally substituted linear or branched, saturated or partially unsaturated hydrocarbyl group which bears a saturated or partially unsaturated cyclic hydrocarbyl moiety; or
(iii) an optionally substituted saturated or partially unsaturated cyclic hydrocarbyl group wherein one or more ring atoms are optionally a heteroatom selected from N, O, P, S or Si, preferably N, O or P.

8. The cable according to any of the preceding claims, wherein the Lewis acid is selected from a subgroup of compounds of formula (I), wherein
M is Ti, Sn, or Al, and most preferably Ti or Al;
each L is a group selected independently form
- linear or branched C₁-C₂₀ alkyl optionally bearing one or two, preferably one, if present, substituent(s) as defined above, preferably linear or branched C₁-C₂₀ alkyl;
- -O-(linear or branched C₁-C₂₀ alkyl) optionally bearing one or two, preferably one, if present, substituent(s) as defined above;
- -O-(linear or branched C₂-C₂₀ alkenyl) optionally bearing one or two, preferably one, if present, subsitutuent(s) as defined above, more preferably -O-(linear or branched C₂-C₂₀ alkenyl) optionally and preferably bearing one or two, preferably one, subsitutuent which is preferably (=O);
- -O-(P=O)-(linear or branched C₁-C₂₀ alkyl) optionally bearing one or two, preferably one, if present, substituent(s) as defined above;
- -O-(P=O)-(linear or branched C₂-C₂₀ alkenyl) optionally bearing one or two, preferably one, if present, substituent(s) as defined above, more preferably O-(P=O)-(linear or branched C₁-C₂₀ alkyl); or
- three L are independently -O-ethylene- each linked to X which is N and the three L form together with M a polycyclic ring system; and
n is 4 in case of Ti, Zr, Hf or Sn, 3 in case of Al or B and 2 in case of Cu or Zn; and
the preferred Lewis acids are selected from
triethanolatoamine titanium isopropanolate (CAS number 74665-17-1), zirconium tetrabutanolate (CAS number 1071-76-7), tris(diethytphosphinato)aluminium (CAS number 225789-38-8 ), Aluminum distearate (CAS number 300-92-5), Dioctyltindilaureate (CAS number 3648-18-81), titanium tristearate monoisopropanolate, zinc (II) acetylacetonate hydrate (CAS number 108503-47-5), copper (II) acetylacetonate (CAS number: 13395-16-9), titanium diacetylacetonate diisopropanolate (CAS number: 27858-32-8), Titanium(IV) butoxide (CAS number 5593-70-4), Titanium diisopropoxide bis(acetylacetonate) (CAS number 17927-72-9), Titanium isopropoxide (4) (CAS number 546-68-9); Tetrakis(2-ethylhexyl) orthotitanate (CAS number 1070-10-6), Tetrakis(triethanolaminato)zirconium(IV) (CAS number 101033-44-7), Zinc stearate (CAS number 557-05-1), Boron trifluoride ethylamine complex (CAS number 75-23-0). Most preferred Lewis acid is selected from triethanolatoamine titanium isopropanolate (CAS number 74665-17-1); tris(diethylphosphinato)aluminum (CAS number 225789-38-8 ); Titanium diisopropoxide bis(acetylacetonate) (CAS number 17927-72-9); Dioctyltindilaureate (CAS number 3648-18-81); Zinc (II) acetylacetonate hydrate (CAS number 108503-47-5) ; and Copper(II) acetylacetonate CAS number 13395-16-9. Even most preferred Lewis acid is selected from triethanolatoamine titanium isopropanolate (CAS number 74665-17-1).

9. The cable according to any of the preceding claims, wherein the crosslinking agent (B) is selected from Lewis acids, preferably from Lewis acids of formula (I) as defined in any of the preceding claims 6-8.

10. The cable according to claim 3, wherein the crosslinking agent (B1) is selected from
(i) Lewis acids as defined in any of the preceding claims 1, 6-8;
(ii) Brönsted acids different from carboxylic acids as defined in claim 1;
(iii) Amines comprising at least one amino group are preferably selected from a saturated aliphatic (mono, di or tri)amine with up to 50, preferably 1 to 20, carbon atoms; unsaturated aliphatic (mono, di or tri)amine with up to 50, preferably 1 to 20, carbon atoms; aromatic hydrocarbyl with up to 50, preferably 1 to 20, carbon atoms; preferably bearing at least two amino substituents; wherein the aliphatic or aromatic moiety may optionally contain one or more hetero atoms and wherein the aliphatic or aromatic amine may optionally contain further substituents; more preferably from aliphatic methylamine such as propylamine, stearylamine, preferably 1, 6-hexadiamine, 1,7-diaminoheptane, trioctamine, aniline, 2-ethylaniline, diethylenetriamine, triethylenetetramine and diethylamino propylamine; cycloaliphatic ring polyamine such as menthendiamine, isophorone diamine, bis(4-amino-3-methylcyclohexyl)methane and N-aminoethyl piperazine; aliphatic polyamine comprising aromatic ring such as meta xylenediamine, polyethyleneimine containing the second and tertiary amine nitrogen; aromatic polyamine such as methaphenylenediamine, methylenediamine and diaminodiphenyl sulfone; and modified polyamine of aliphatic polyamines, aliphatic polyamine comprising aromatic ring(s) and/or aromatic polyamines obtainable by well known modification methods, such as addition reaction with epoxy compound, Michael addition reaction with acrylonitrile acrylic ester, and Mannich reaction with a methylol compound, for example imidazole family, such as 2-methylimidazole, 2-ethyl-4 methylimidazole and 1-cyanoethyl-2 methylimidazole, and tri-2-ethylhexyl acid salt of tertiary amine such as tris-dimethylamino phenol, and tris-dimethylamino methyl phenol; more preferable amines comprise at least two amino groups of which non-limiting examples are 1,7-diaminoheptane, 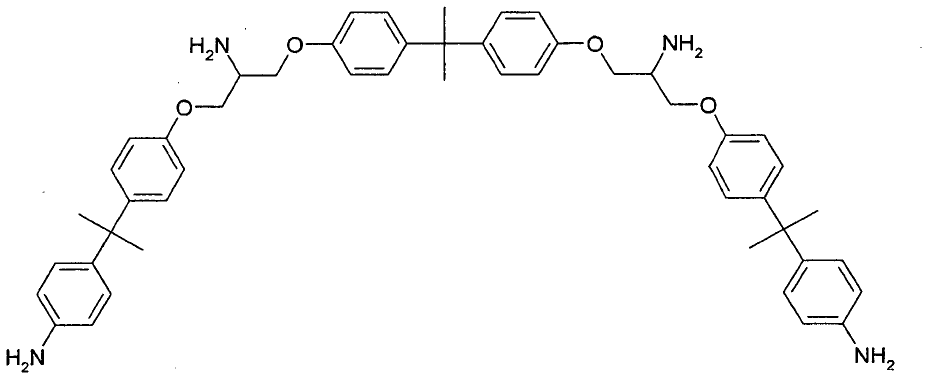 , or 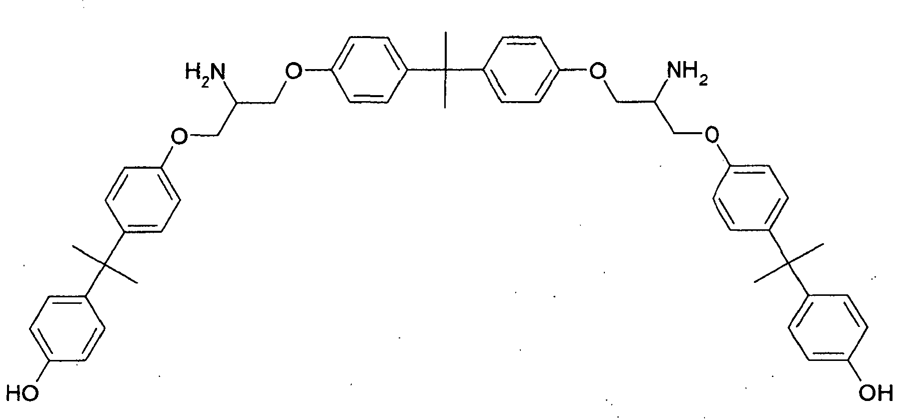 , the most preferred amine being 1,7-diaminoheptane;
(iv) Alcohols comprising at least two OH groups are preferably selected from aliphatic di- to hexa-alcohols or aromatic di- to hexa-alcohols, preferably from aliphatic di-, tri- or tetra-alcohols or aromatic di-, tri- or tetra-alcohols; more preferably such alcohols comprise 2 to 100, preferably 15 to 90, more preferably 15 to 90, most preferably 30 to 70, carbon atoms and may optionally comprise further heteroatoms which, if present, are preferably selected from N, S, O and/or P, more preferably from S, 0 or P even more preferably from S or O and most preferably the further heteroatom(s) are O;
(v) Anhydrides of carboxylic acids are preferably carboxylic acid anhydrides comprising at least one carboxylic acid anyhdride group and may contain further substituents, such as a carboxylic acid substituents, or further heteroatoms, such as defined above for (iv) alcohols; preferable carboxylic acid anhydrides are selected from aliphatic carboxylic acid anhydrides or saturated or partially unsaturated cyclic carboxylic acid anhydrides or aromatic carboxylic acid anhydrides; more preferable anhydrides of carboxylic acids are selected from anhydrides of saturated or partially unsaturated cyclic carboxylic acids containing up to 50, preferably 1 to 20, carbon atoms; the unsaturated aliphatic anhydride of carboxylic acid containing up to 50, preferably 1 to 20, carbon atoms; or aromatic carboxylic acid anhydrides containing up to 50, preferably 1 to 20, carbon atoms; or any mixtures thereof, more preferable anhydrides of carboxylic acids are selected from carboxilyc acids anhydrides derived from butyric acid, maleic acid, itaconic acid, fumarate acid, benzoic acid, vegetable oil such as palm oil, whale oil, fatty acid extracted from animal oil such as beef tallow oil, lauric acid, pulmitic acid, stearic acid, oleic acid, more preferably derived from compounds comprising two or more carboxyl groups, such as DL-malic acid, sebacic acid, succinic acid, adipic acid, thiodipropionic acid, citraconic acid, citric acid, phatalic acid; and most preferably from DL-malic acid and sebacic acid, most preferred carboxylic acid anhydride is 1,2,4-benzenetricarboxylic anhydride, CAS number 552-30-7;
(vi) Carboxylic acids comprising at least one carboxylic acid group are preferably selected from carboxcylic acids containing compounds; copolymers of olefin with a compound comprising acid group(s); or acid modified polymer, such as acid modified polyethylene, acid modified polypropylene and acid modified wax; more preferable carboxylic acids are selected from ethylene-acrylic acid copolymer, ethylene-methacrylic acid copolymer, ethylene-crotonic acid copolymer, ethylene-maleic anhydride copolymer, maleic anhydride acid modified polyethylene and pyrolysate of ethylene-ethyl acrylate copolymer.

11. The cable according to any one of the preceding claims, wherein the olefin polymer (A) is a copolymer of ethylene with at least epoxy-groups containing comonomer units and optionally with other comonomer(s) different from epoxy-group containing monomer units, which other comonomer is preferably a polar comonomer different from epoxy-group containing monomer units, more preferably an acrylate or acetate group containing comonomer unit, more preferably the olefin polymer (A) is selected from an ethylene copolymer with glycidyl methacrylate comonomer units or an ethylene copolymer with polar comonomer units selected from an alkyl(meth)acrylate or a vinyl acetate comonomer units and glycidyl methacrylate comonomer units.

12. The cable according to any one of the preceding claims, wherein the amount of epoxy-group-containing monomer units is 0.1 to 10 wt% based on the amount of olefin polymer (A).

13. The cable according to any one of the preceding claims which further comprises
a polymer (C) which is an alpha-olefin homo- or copolymer comprising
- alpha-olefin monomer units (Q) selected from one C₂ to C₁₀ alpha-olefin; and
- optionally, monomer units (R) selected from one or more
alpha-olefin(s) different from (Q); or
an elastomer (D) which is preferably a nitrile rubber, or
any mixtures thereof.

14. The cable according to any one of the preceding claims wherein the amount of the conductive filler is 10 to 50 wt% based on the total amount of the polyolefin composition, whereby, preferably, the conductive filler is carbon black.

15. A process for producing a cable as defined in any of the preceding claims 1-14 comprising a conductor surrounded by at least one layer, wherein the at least one layer is formed from a polyolefin composition which comprises
- an olefin polymer (A) comprising epoxy-groups; and
- at least one crosslinking agent (B) which accelerates the crosslinking reaction of epoxy-groups and which is selected from
(i) Lewis acids as defined in any one of the preceding claims 1 to 14,
(ii) Brönsted acids different from carboxylic acids as defined in any one of the preceding claims 1 to 14; or
(iii) any mixtures thereof, and
- optionally a conductive filler, preferably carbon black; and optionally crosslinking the obtained cable;
preferably for producing a power cable comprising a conductor surrounded by at least an inner semiconductive layer, an insulation layer and an outer semiconductive layer, in that order, wherein the at least one of the inner semiconductive layer and the outer semiconductive layer, preferably at least the outer semiconductive layer, is formed from the polyolefin composition which comprises,
- an olefin polymer (A) comprising epoxy-groups; and
- at least one crosslinking agent (B) which accelerates the crosslinking reaction of epoxy-groups and which is selected from
(i) Lewis acids as defined in any one of the preceding claims 1 to 14,
(ii) Brönsted acids different from carboxylic acids as defined in any one of the preceding claims 1 to 14;
(iii) or any mixtures thereof, and
- a conductive filler, preferably carbon black;
and, optionally, one or more of the other layer(s) preferably at least the insulation layer, are formed from a polyolefin composition (b) comprising
- an olefin polymer (A) comprising epoxy-groups, preferably as defined in any of the preceding claims 11 or 12 ; and
- at least one crosslinking agent (B1) which accelerates the crosslinking reaction of epoxy-groups, preferably at least one crosslinking agent (B1) which is selected from
(i) Lewis acids,
(ii) Brönsted acids different from carboxylic acids,
(iii) amines comprising at least one amino group,
(iv) alcohols comprising at least two OH groups,
(v) anhydrides of carboxylic acids,
(vi) carboxylic acids comprising at least one carboxylic acid group,
or any mixtures thereof, preferably the crosslinking agent (B1) is as defined in any of the preceding claims 1 and 6 to 10; and
optionally crosslinking the obtained cable.

16. The process according to claim 15 for producing a power cable comprising a conductor surrounded by at least an inner semiconductive layer, an insulation layer and an outer semiconductive layer, in that order, wherein the process comprises the steps of
(a1)
- providing and mixing, preferably meltmixing in an extruder, a first semiconductive composition comprising a polymer, a conductive filler and optionally further component(s) for the inner semiconductive layer,
- providing and mixing, preferably meltmixing in an extruder, a polymer composition for the insulation layer,
- providing and mixing, preferably meltmixing in an extruder, a second semiconductive composition comprising a polymer, a conductive filler and optionally further component(s) for the outer semiconductive layer;
(b1)
- applying on a conductor, preferably by coextrusion,
- a meltmix of the first semiconductive composition obtained from step (a1) to form the inner semiconductive layer,
- a meltmix of polymer composition obtained from step (a1) to form the insulation layer, and
- a meltmix of the second semiconductive composition obtained from step (a1) to form the outer semiconductive layer,
wherein at least the second semiconductive composition of the obtained outer semiconductive layer comprises, preferably consists of, a polyolefin composition comprising
- an olefin polymer (A) comprising epoxy-groups;
- at least one crosslinking agent (B) which accelerates the crosslinking reaction of epoxy-groups and which is selected from
(i) Lewis acids as defined in any one of the preceding claims 1 to 14,
(ii) Brönsted acids different from carboxylic acids as defined in any one of the preceding claims 1 to 14; or
(iii) any mixtures thereof; and
- a conductive filler; and
wherein optionally and preferably the obtained insulation layer and optionally the obtained inner semiconductive layer comprises, preferably consists of, a polyolefin composition (b) comprising,
- an olefin polymer (A) comprising epoxy-groups; and
- at least one crosslinking agent (B1) which accelerates the crosslinking reaction of epoxy-groups, preferably at least one crosslinking agent (B1) which is selected from
(i) Lewis acids,
(ii) Brönsted acids different from carboxylic acids,
(iii) amines comprising at least one amino group,
(iv) alcohols comprising at least two OH groups,
(v) anhydrides of carboxylic acids,
(vi) carboxylic acids comprising at least one carboxylic acid group,
or any mixtures thereof; and
(c1)
optionally, and preferably, crosslinking at least the obtained outer semiconductive layer in the presence of the crosslinking agent (B), optionally, and preferably, crosslinking the obtained insulation layer in the presence of the crosslinking agent (B1), and optionally crosslinking the obtained inner semiconductive layer, which optionally comprises the polyolefin compostion (b).

## Patentansprüche

1. Ein Kabel, umfassend einen Leiter, der von einer oder mehreren Schicht(en) umgeben ist, worin mindestens eine Schicht eine Polyolefinzusammensetzung umfasst, umfassend
- ein Olefinpolymer (A), umfassend Epoxy-Gruppen;
- mindestens ein Vernetzer (B), welcher die Vernetzungsreaktion der Epoxy-Gruppen beschleunigt und welcher ausgewählt ist aus
(i) Lewissäuren, welche Verbindungen mit der folgenden Formel (I) sind
M^{+m}Lₙ (I),
worin
- M ein Element ausgewählt aus Lanthaniden oder ein Element der Gruppen 2 bis 14 des IUPAC Periodensystems (1989) außer den Elementen der Gruppe 7 des IUPAC Periodensystems (1989) und Be, C, Si, Ge, Ti, Pb, Tc, Hg und Cd ist;
- jedes L ist gleich oder unterschiedlich und ist ein Ligand gebunden an M und ist eine substituierte oder unsubstituierte gesättigte oder teilweise ungesättigte Kohlenwasserstoffgruppe ausgewählt aus
(i) eine wahlweise substituierte, lineare oder verzweigte, gesättigte oder teilweise ungesättigte Kohlenwasserstoffgruppe mit bis zu 30 Kohlenstoffatomen; mehr bevorzugt lineare oder verzweigte C₁-C₂₀ Alkyl; lineare oder verzweigte C₂-C₂₀ Alkenyl; oder lineare oder verzweigte C₂-C₂₀ Alkinyl, mehr bevorzugt lineare oder verzweigte C₁-C₂₀ Alkyl; oder lineare oder verzweigte C₂-C₂₀ Alkenyl;
(ii) eine wahlweise substituierte, lineare oder verzweigte, gesättigte oder teilweise ungesättigte Kohlenwasserstoffgruppe, welche einen gesättigten oder teilweise ungesättigten cyclischen Kohlenwasserstoffteil trägt, oder eine wahlweise substituierte, lineare oder verzweigte, gesättigte oder teilweise ungesättigte Kohlenwasserstoffgruppe, welche einen aromatischen Kohlenwasserstoffteil trägt; vorzugsweise eine wahlweise substituierte, lineare oder verzweigte, gesättigte oder teilweise ungesättigte Kohlenwasserstoffgruppe, welche einen gesättigten oder teilweise ungesättigten cyclischen Kohlenwasserstoffteil trägt; oder
(iii) eine wahlweise substituierte, gesättigte oder teilweise ungesättigte cyclische Kohlenwasserstoffgruppe, worin ein oder mehrere Ringatome wahlweise ein Heteroatom sind, ausgewählt aus N, O, P, S oder Si, vorzugsweise N, O oder P;
und
m ist 1 bis 4, und n ist 1 bis 4, mit der Bedingung, dass m-n 0 ist; oder die Lewissäure ist ausgewählt aus einer Untergruppe von Verbindungen der Formel (I),
M^{+m}Lₙ (I)
worin
M Ti, Zr, Hf, Sn, Cu, Zn oder Al, vorzugsweise Ti, Sn, Zn, Cu oder Al ist; jedes L ist eine Gruppe, umfassend 1 bis 30 Kohlenstoffatome und unabhängig ausgewählt aus
- wahlweise substituiertem Kohlenwasserstoff ohne Heteroatome;
- wahlweise substituierter -O-Kohlenwasserstoffgruppe;
- -O-(C=O)-Kohlenwasserstoffgruppe;
- -O-(P=O)-Kohlenwasserstoffgruppe; oder
- zwei oder drei L sind -O-Kohlenwasserstoff-, miteinander via einem Atom X verbunden, welches ein C oder N Atom ist, und zusammen mit M ein cyclisches Ringsystem bilden; worin jeder Kohlenwasserstoff unabhängig ist wie oben definiert; und
n ist 4 im Falle von Ti, Zr, Hf oder Sn; 3 im Falle von Al oder B; und 2 im Falle von Cu oder Zn
(ii) Brönstedsäuren, unterschiedlich von Carbonsäuren, welche eine aromatische organische Sulfonsäure ist, umfassend das Strukturelement:
Ar(SO₃H)ₓ (II),
worin
Ar eine Arylgruppe ist, welche substituiert oder nicht-substituiert sein kann, und falls substituiert, dann vorzugsweise mit mindestens einer Kohlenwasserstoffgruppe bis 50 Kohlenstoffatome, und wobei x mindestens 1 ist, oder eine Vorstufe der Sulfonsäure nach Formel (II), beinhaltend eine Säureanhydrid davon oder eine Sulfonsäure nach Formel (II), die mit einer hydrolysierbaren Schutzgruppe(n) versehen wurde, beispielsweise eine Acetylgruppe, die durch Hydrolyse entfernbar ist; oder
(iii) jegliche Gemische davon, und
- wahlweise ein leitender Füllstoff.

2. Das Kabel gemäß Anspruch 1, welches ein Stromkabel ist, umfassend einen Leiter umgeben von mindestens einer inneren halbleitenden Schicht, einer Isolationsschicht und einer äußeren halbleitenden Schicht, in dieser Reihenfolge, worin mindestens eine Schicht umfasst, vorzugsweise besteht aus einer Polyolefinzusammensetzung, umfassend
- ein Olefinpolymer (A), umfassend Epoxy-Gruppen;
- mindestens einen Vernetzer (B), welcher die Vernetzungsreaktion der Epoxy-Gruppen beschleunigt und welcher ausgewählt ist aus
(i) Lewissäuren wie in Anspruch 1 definiert,
(ii) Brönstedsäuren, unterschiedlich von Carbonsäuren, wie in Anspruch 1 definiert; oder
(iii) jegliche Gemische davon, und
- wahlweise ein leitender Füllstoff, vorzugsweise Carbon Black.

3. Das Kabel gemäß Anspruch 1 oder 2, worin eine oder weitere andere Schicht(en) umfasst eine Polyolefinzusammensetzung (b), umfassend
- ein Olefinpolymer (A), umfassend Epoxy-Gruppen; und
- mindestens einen Vernetzer (B1), welcher die Vernetzungsreaktion von Epoxy-Gruppen beschleunigt, vorzugsweise mindestens ein Vernetzer (B1), welcher ausgewählt ist aus
(i) Lewissäuren,
(ii) Brönstedsäuren, unterschiedlich von Carbonsäuren,
(iii) Aminen, umfassend mindestens eine Aminogruppe,
(iv) Alkoholen, umfassend mindestens zwei OH-Gruppen,
(v) Anhydriden von Carbonsäuren,
(vi) Carbonsäuren, umfassend mindestens eine Carbonsäure-Gruppe,
oder jegliche Gemische davon.

4. Das Kabel gemäß einem der vorhergehenden Ansprüche, welches ein Stromkabel ist, umfassend einen Leiter umgeben von mindestens einer inneren halbleitenden Schicht, einer Isolationsschicht und einer äußeren halbleitenden Schicht, in dieser Reihenfolge, worin die mindestens eine der inneren halbleitenden Schicht und der äußeren halbleitenden Schicht umfasst, vorzugsweise besteht aus, einer Polyolefinzusammensetzung, umfassend,
- ein Olefinpolymer (A), umfassend Epoxy-Gruppen; und
- mindestens einen Vernetzer (B), welcher die Vernetzungsreaktion der Epoxy-Gruppen beschleunigt und welcher ausgewählt ist aus
(i) Lewissäuren wie in Anspruch 1 definiert,
(ii) Brönstedsäuren, unterschiedlich von Carbonsäuren, wie definiert in Anspruch 1; oder
(iii) jegliche Gemische davon; und
ein leitender Füllstoff, vorzugsweise Carbon Black.

5. Das Kabel gemäß einem der vorhergehenden Ansprüche, welches ein Stromkabel ist, umfassend einen Leiter umgeben von mindestens einer inneren halbleitenden Schicht, einer Isolationsschicht und einer äußeren halbleitenden Schicht, in dieser Reihenfolge, worin mindestens die äußere halbleitende Schicht, umfasst, vorzugsweise besteht aus, einer halbleitenden Polyolefinzusammensetzung, welche umfasst
- ein Olefinpolymer (A), umfassend Epoxy-Gruppen;
- mindestens einen Vernetzer (B), welcher die Vernetzungsreaktion der Epoxy-Gruppen beschleunigt und welche ausgewählt ist aus
(i) Lewissäuren wie in Anspruch 1 definiert,
(ii) Brönstedsäuren, unterschiedlich von Carbonsäuren, wie in Anspruch 1 definiert; oder
(iii) jegliche Gemische davon, und
ein leitender Füllstoff, vorzugsweise Carbon Black;
und, wahlweise, worin eine oder mehrere der anderen Schicht(en), welche vorzugsweise mindestens die Isolationsschicht ist, umfasst, vorzugsweise besteht aus, einer Polyolefinzusammensetzung (b), umfassend
- ein Olefinpolymer (A), umfassend Epoxy-Gruppen; und
- mindestens einen Vernetzer (B1), welcher die Vernetzungsreaktion der Epoxy-Gruppen beschleunigt, vorzugsweise Vernetzer (B1), welcher ausgewählt ist aus
(i) Lewissäuren,
(ii) Brönstedsäuren, unterschiedlich von Carbonsäuren,
(iii) Aminen, umfassend mindestens eine Amino-Gruppe,
(iv) Alkoholen, umfassend mindestens zwei OH-Gruppen,
(v) Anhydriden von Carbonsäuren,
(vi) Carbonsäuren, umfassend mindestens eine Carbonsäure-Gruppe,
oder jegliche Gemische davon.

6. Das Kabel gemäß einem der vorhergehenden Ansprüche, worin die Lewissäuren Verbindungen aus einer Untergruppen von Lewissäuren von Verbindungen nach Formel (I) sind, worin
- M ausgewählt ist aus Lanthaniden und einem Element der Gruppen 4, 11, 12, 13 und 14 des IUPAC Periodensystems (1989) außer den Elementen der Gruppe 7 des IUPAC Periodensystems (1989) und C, Si, Ge, Tl, Pb, Tc, Hg und Cd, mehr bevorzugt ist M ein Element ausgewählt aus Gruppe 4, 11, 12, 13 oder 14 wie oben definiert, mehr bevorzugt ist M ausgewählt aus Ti (Titan), Zr (Zirkonium), Hf (Hafnium), Sn (Zinn), Al (Aluminium), Cu (Kupfer), Zn (Zink) und B (Bor).

7. Das Kabel gemäß einem der vorhergehenden Ansprüche, worin die Lewissäure ausgewählt ist aus einer Untergruppe von Verbindungen nach Formel (I), worin die substituierte oder unsubstituierte, gesättigte oder teilweise ungesättigte Kohlenwasserstoffgruppe als L mehr bevorzugt ist
(i) eine wahlweise substituierte, lineare oder verzweigte, gesättigte oder teilweise ungesättigte Kohlenwasserstoffgruppe; mehr bevorzugt lineare oder verzweigte C₁-C₂₀ Alkyl; lineare oder verzweigte C₂-C₂₀ Alkenyl; oder lineare oder verzweigte C₂-C₂₀ Alkinyl, mehr bevorzugt lineare oder verzweigte C₁-C₂₀ Alkyl; oder lineare oder verzweigte C₂-C₂₀ Alkenyl;
(ii) eine wahlweise substituierte, lineare oder verzweigte, gesättigte oder teilweise ungesättigte Kohlenwasserstoffgruppe, welche einen gesättigten oder teilweise ungesättigten cyclischen Kohlenwasserstoffteil trägt, oder eine wahlweise substituierte, lineare oder verzweigte, gesättigte oder teilweise ungesättigte Kohlenwasserstoffgruppe, welche einen wahlweise substitutierten aromatischen Kohlenwasserstoffteil trägt, vorzugsweise eine wahlweise substituierte lineare oder verzweigte, gesättigte oder teilweise ungesättigte Kohlenwasserstoffgruppe, welche einen gesättigten oder teilweise ungesättigten cyclischen Kohlenwasserstoffteil trägt; oder
(iii) eine wahlweise substituierte, gesättigte oder teilweise ungesättigte cyclische Kohlenwasserstoffgruppe, worin ein oder mehrere Ringatome wahlweise ein Heteroatom sind, ausgewählt aus N, O, P, S oder Si, vorzugsweise N, O oder P.

8. Das Kabel gemäß einem der vorhergehenden Ansprüche, worin die Lewissäure ausgewählt ist aus einer Untergruppe von Verbindungen nach Formel (I), worin
M Ti, Sn oder Al und am meisten bevorzugt Ti oder Al ist;
jedes L ist eine Gruppe unabhängig ausgewählt aus
- linearem oder verzweigtem C₁-C₂₀ Alkyl wahlweise tragend einen oder zwei, vorzugsweise einen, falls vorhanden, Substituent(en) wie oben definiert, vorzugsweise lineares oder verzweigtes C₁-C₂₀ Alkyl;
- -O-(linearem oder verzweigtem C₁-C₂₀ Alkyl) wahlweise tragend einen oder zwei, vorzugsweise einen, falls vorhanden, Substituent(en) wie oben definiert;
- -O-(linearem oder verzweigtem C₂-C₂₀ Alkenyl) wahlweise tragend einen oder zwei, vorzugsweise einen, falls vorhanden, Substituent(en) wie oben definiert, mehr bevorzugt -O-(linearem oder verzweigtem C₂-C₂₀ Alkenyl) wahlweise und vorzugsweise tragend einen oder zwei, vorzugsweise einen, falls anwesend, Substituenten, welcher vorzugsweise (=O) ist;
- -O-(P=O)-(linearem oder verzweigtem C₁-C₂₀ Alkyl) wahlweise tragend einen oder zwei, vorzugsweise einen, falls vorhanden, Substituent(en) wie oben definiert;
- -O-(P=O)-(linearem oder verzweigtem C₂-C₂₀ Alkenyl) wahlweise tragend einen oder zwei, vorzugsweise einen, falls vorhanden, Substituent(en) wie oben definiert, mehr bevorzugt O-(P=O)-(linearem oder verzweigtem C₁-C₂₀ Alkyl); oder
- drei L sind unabhängig -O-Ethylen- jedes mit X, welches N ist, verbunden und die drei L bilden zusammen mit M ein polycyclisches Ringsystem; und
n ist 4 im Falle von Ti, Zr, Hf oder Sn, 3 im Falle von Al oder B und 2 im Falle von Cu oder Zn; und
die bevorzugten Lewissäuren sind ausgewählt aus
Titanisopropanolat Triethanolatamin (CAS Nummer 74665-17-1), Zirkoniumtetrabutanolat (CAS Nummer 1071-76-7), Aluminium-tris(diethylphosphinat) (CAS Nummer 225789-38-8), Aluminiumdistearat (CAS Nummer 300-92-5), Dioctyl-Zinndilaureat (CAS Nummer 3648-18-81), Titantristearat Monoisopropanolat, Zink-(II)-acetylacetonat Hydrat (CAS Nummer 108503-47-5), Kupfer-(II)-acetylacetonat (CAS Nummer: 13395-16-9), Titandiacetylacetonat Diisopropanolat (CAS Nummer: 27858-32-8), Titan-(IV)-butoxid (CAS Nummer 5593-70-4), Titandiisopropoxid Bis(acetylacetonat) (CAS Nummer 17927-72-9), Titanisopropoxid (4) (CAS Nummer 546-68-9); Tetrakis(2-ethylhexyl)-orthotitanat (CAS Nummer 1070-10-6), Tetrakis(triethanolaminato) Zirkonium(IV) (CAS Nummer 101033-44-7), Zinkstearat (CAS Nummer 557-05-1), Bortrifluorid Ethylamin-Komplex (CAS Nummer 75-23-0). Am meisten bevorzugt Lewissäure ist ausgewählt aus Titanisopropanolat Triethanolatamin (CAS Nummer 74665-17-1), Aluminium-tris(diethylphosphinat) (CAS Nummer 225789-38-8), Titandiisopropoxid Bis(acetylacetonat) (CAS Nummer 17927-72-9), Dioctyl-Zinndilaureat (CAS Nummer 3648-18-81); Zink-(II)-acetylacetonat Hydrat (CAS Nummer 108503-47-5) und Kupfer-(II)-acetylacetonat (CAS Nummer 13395-16-9). Sogar am meisten bevorzugt Lewissäure ist ausgewählt aus Titanisopropanolat Triethanolatamin (CAS Nummer 74665-17-1).

9. Das Kabel gemäß einem der vorhergehenden Ansprüche, worin der Vernetzer (B) ausgewählt ist aus Lewissäuren, vorzugsweise aus Lewissäuren nach Formel (I) wie in einem der vorhergehenden Ansprüche 6 - 8 definiert.

10. Das Kabel gemäß Anspruch 3, worin der Vernetzer (B1) ausgewählt ist aus
(i) Lewissäuren wie in einem der vorhergehenden Ansprüche 1, 6 - 8 definiert;
(ii) Brönstedsäuren, unterschiedlich von Carbonsäuren, wie in Anspruch 1 definiert;
(iii) Aminen, umfassend mindestens eine Aminogruppe, vorzugsweise ausgewählt aus einem gesättigten, aliphatischen (Mono-, Di- oder Tri-) Amin mit bis zu 50, vorzugsweise 1 bis 20, Kohlenstoffatomen; ungesättigtem aliphatischem (Mono-, Di- oder Tri-) Amin mit bis zu 50, vorzugsweise 1 bis 20, Kohlenstoffatomen; aromatischem Kohlenwasserstoff mit bis zu 50, vorzugsweise 1 bis 20, Kohlenstoffatomen; vorzugsweise mindestens zwei Aminosubstituenten tragend; worin der aliphatische oder aromatische Teil wahlweise ein oder mehrere Heteroatome beinhalten kann und worin das aliphatische oder aromatische Amin wahlweise weitere Substituenten beinhalten kann; mehr bevorzugt aus aliphatischem Methylamin so wie Propylamin, Stearylamin, vorzugsweise 1,6-Hexadiamin, 1,7-Diaminoheptan, Trioctaamin, Anilin, 2-Ethylanilin, Diethylentriamin, Triethylentetraamin und Diethylaminopropylamin; cycloaliphatisches Ring-Polyamin so wie Menthendiamin, Isophorendiamin, Bis(4-amino-3-methylcyclohexyl)methan und N-Aminoethylpiperazin; aliphatisches Polyamin, umfassend aromatischen Ring so wie meta-Xyloldiamin, Polyethylenimin, beinhaltend den zweiten und tertiären Aminstickstoff;
aromatisches Polyamin wie zum Beispiel meta-Phenylendiamin, Methylendiamin und Diaminophenylsulfon; und modifiziertes Polyamin von aliphatischen Polyaminen, aliphatisches Polyamin, umfassend aromatische(n) Ring(e) und/oder aromatische Polyamine erhältlich durch bekannte Modifizierungsmethoden, so wie Additionsreaktion mit Epoxyverbindung, Michael-Additions-Reaktion mit Acrylonitrilacrylester, und Mannich Reaktion mit einer Methylolverbindung, zum Beispiel, Imidazolfamilie, so wie 2-Methylimidazol, 2-Ethyl-4-methylimidazol und 1-Cyanoethyl-2-methylimidazol und Tri-2-ethylhexylsäure Salz von tertiärem Amin so wie Tris-dimethylaminophenol und Tris-dimethylaminomethylphenol; mehr bevorzugt Amine, die mindestens zwei Aminogruppen umfassen, von welchen nicht einschränkende Bespiele 1,7-Diaminoheptan, 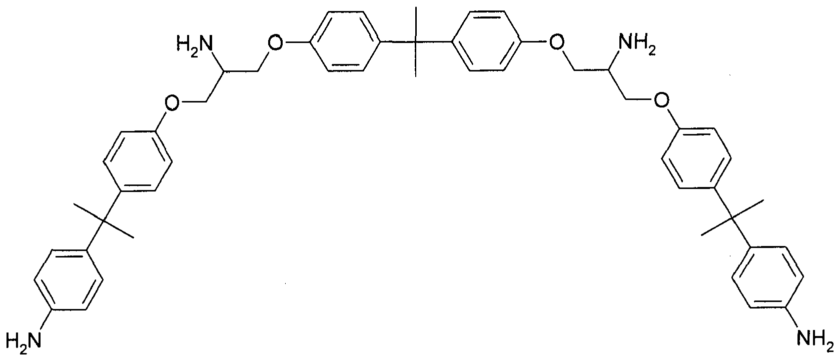 oder 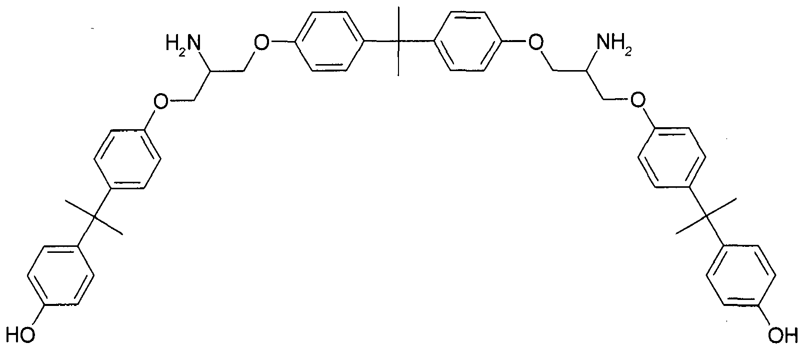 sind, das am meisten bevorzugte Amin ist 1,7-Diaminoheptan;
(iv) Alkohole, umfassend mindestens zwei OH-Gruppen, sind vorzugsweise ausgewählt aus aliphatischen Di- oder Hexa-Alkoholen oder aromatischen Di- oder Hexa-Alkoholen, vorzugsweise aus aliphatischen Di-, Tri- oder Tetra-Alkoholen oder aromatischen Di-, Tri- oder Tetra-Alkoholen; mehr bevorzugt umfassen solche Alkohole 2 bis 100, vorzugsweise 15 bis 90, mehr bevorzugt 15 - 90, am meisten bevorzugt 30 bis 70, Kohlenstoffatome und können wahlweise weitere Heteroatome umfassen, welche, falls vorhanden, vorzugsweise ausgewählt sind aus N, S, O und/oder P, mehr bevorzugt aus S, O oder P, sogar mehr bevorzugt aus S oder O und am meisten bevorzugt sind die weiteren Heteroatom(e) O;
(v) Anhydride von Carbonsäuren sind vorzugsweise Carbonsäureanhydride, umfassend mindestens eine Carbonsäureanhydrid-Gruppe und können weitere Substituenten enthalten, so wie einen Carbonsäuresubstituenten, oder weitere Heteroatome, so wie oben für (iv) Alkohole definiert; zu bevorzugende Carbonsäureanhydride sind ausgewählt aus aliphatischen Carbonsäureanhydriden oder gesättigten oder teilweise ungesättigten cyclischen Carbonsäureanhydriden oder aromatischen Carbonsäureanhydriden; mehr bevorzugte Anhydride von Carbonsäuren sind ausgewählt aus Anhydriden von gesättigten oder teilweise ungesättigten cyclischen Carbonsäuren beinhaltend bis zu 50, vorzugsweise 1 bis 20, Kohlenstoffatome; die ungesättigten, aliphatischen Anhydride von Carbonsäuren beinhaltend bis zu 50,
vorzugsweise 1 bis 20, Kohlenstoffatome; oder aromatische Carbonsäureanhydride beinhaltend bis zu 50, vorzugsweise 1 bis 20, Kohlenstoffatome; oder jegliche Gemische davon, mehr bevorzugte Anhydride von Carbonsäuren sind ausgewählt aus Carbonsäureanhydriden abgeleitet von Buttersäure, Maleinsäure, Itakonsäure, Fumarsäure, Benzoesäure, pflanzlichem Öl so wie Palmöl, Walöl, Fettsäuren extrahiert aus tierischem Öl so wie Rindertalgöl, Laurinsäure, Palmitinsäure, Stearinsäure, Ölsäure, mehr bevorzugt abgeleitet von Verbindungen umfassend zwei oder mehr Carboxylgruppen, wie zum Beispiel DL-Maleinsäure, Sebacinsäure, Bernsteinsäure, Adipinsäure, Thiodipropionsäure, Citraconsäure, Zitronensäure, Phthalsäure; und am meisten bevorzugt aus DL-Maleinsäure und Sebacinsäure, am meisten bevorzugt Carbonsäureanhydrid ist Trimellitsäureanhydrid, CAS Nummer 552-30-7;
(vi) Carbonsäuren, umfassend mindestens eine Carbonsäuregruppe sind vorzugsweise ausgewählt aus Carbonsäure-enthaltenden Verbindungen; Copolymeren von Olefinen mit einer Verbindung, umfassend Säuregruppe(n); oder säuremodifiziertes Polymer, so wie säuremodifiziertes Polyethylen, säuremodifiziertes Polypropylen und säuremodifiziertes Wachs; mehr bevorzugte Carbonsäuren sind ausgewählt aus Ethylen-Acrylsäure-Copolymer, Ethylen-Methacrylsäure-Copolymer, Ethylen-Krotonsäure-Copolymer, Ethylen-Maleinsäureanhydrid-Copolymer, Maleinsäureanhydrid-modifiziertes Polyethylen und Pyrolysat von Ethylen-Ethylacrylat-Copolymer.

11. Das Kabel gemäß einem der vorhergehenden Ansprüche, worin das Olefinpolymer (A) ein Copolymer von Ethylen mit mindestens Epoxy-Gruppen-beinhaltenden Comonomereinheiten und wahlweise mit anderen Comonomer(en) unterschiedlich von Epoxy-Gruppen-beinhaltenden Monomereinheiten ist, wobei das andere Comonomer vorzugsweise ein polares Comonomer, unterschiedlich von Epoxy-Gruppen-beinhaltenden Monomereinheiten ist, mehr bevorzugt eine Acrylat- oder Acetat-Gruppebeinhaltende Comonomereinheit, mehr bevorzugt das Olefinpolymer (A) ausgewählt ist aus einem Ethylencopolymer mit Glycidyl-Methacrylat-Comonomereinheiten oder einem Ethylen-Copolymer mit polaren Comonomereinheiten ausgewählt aus einem Alkyl(meth)acrylat- oder einer Vinylacetat-Comonomereinheiten und Glycidyl-Methacrylat Comonomereinheiten.

12. Das Kabel gemäß einem der vorhergehenden Ansprüche, worin die Menge von Epoxy-Gruppen-beinhaltenden Monomereinheiten 0,1 bis 10 Gewichtsprozent ist, basierend auf der Menge von Olefinpolymer (A).

13. Das Kabel gemäß einem der vorhergehenden Ansprüche, welches weiter umfasst,
ein Polymer (C), welches ein alpha-Olefin Homo- oder Copolymer ist, umfassend
- alpha-Olefin Monomereinheiten (Q) ausgewählt aus einem C₂ bis C₁₀ alpha-Olefin; und
- wahlweise Monomereinheiten (R) ausgewählt aus einem oder mehreren alpha-Olefin(en) unterschiedlich von (Q); oder
ein Elastomer (D), welches vorzugsweise ein Nitrilgummi ist, oder
jegliche Gemische davon.

14. Das Kabel gemäß einem der vorhergehenden Ansprüche, worin die Menge an leitendem Füllstoff 10 bis 50 Gewichtsprozent ist, basierend auf der Gesamtmenge der Polyolefinzusammensetzung, wobei, vorzugsweise, der leitende Füllstoff Carbon Black ist.

15. Verfahren zum Herstellen eine Kabels wie in einem der vorhergehenden Ansprüche 1-14 definiert, umfassend einen Leiter umgeben von mindestens einer Schicht, worin die mindestens eine Schicht aus einer Polyolefinzusammensetzung gebildet ist, welche umfasst,
- ein Olefinpolymer (A), umfassend Epoxy-Gruppen; und
- mindestens einen Vernetzer (B), welcher die Vernetzungsreaktion der Epoxy-Gruppen beschleunigt, und welcher ausgewählt ist aus
(i) Lewissäuren wie in einem der vorhergehenden Ansprüche 1 bis 14 definiert,
(ii) Brönstedsäuren, unterschiedlich von Carbonsäuren, wie in einem der vorhergehenden Ansprüche 1 bis 14 definiert; oder
(iii) jegliche Gemische davon, und
- wahlweise ein leitender Füllstoff, vorzugsweise Carbon Black; und wahlweise das erhaltene Kabel vernetzend;
vorzugsweise, um ein Stromkabel herzustellen, umfassend einen Leiter umgeben von mindestens einer inneren halbleitenden Schicht, einer Isolationsschicht und einer äußeren halbleitenden Schicht, in dieser Reihenfolge, worin die mindestens eine der inneren halbleitenden Schicht und der äußeren halbleitenden Schicht, vorzugsweise mindestens die äußere halbleitende Schicht, aus der Polyolefinzusammensetzung gebildet ist, welche umfasst,
- ein Olefinpolymer (A), umfassend Epoxy-Gruppen; und
- mindestens ein Vernetzer (B), welcher die Vernetzungsreaktion der Epoxy-Gruppen beschleunigt und welcher ausgewählt ist aus
(i) Lewissäuren wie in einem der vorhergehenden Ansprüche 1 bis 14 definiert,
(ii) Brönstedsäuren, unterschiedlich von Carbonsäuren, wie in einem der vorhergehenden Ansprüche 1 bis 14 definiert;
(iii) oder jegliche Gemische davon, und
- ein leitender Füllstoff, vorzugsweise Carbon Black;
und, wahlweise, eine oder mehrere der anderen Schicht(en) vorzugsweise mindestens die Isolationsschicht, sind aus der Polyolefinzusammensetzung (b) gebildet, umfassend
- ein Olefinpolymer (A), umfassend Epoxy-Gruppen, vorzugsweise wie in einem der vorhergehenden Ansprüche 11 oder 12 definiert; und
- mindestens einen Vernetzer (B1), welcher die Vernetzungsreaktion der Epoxy-Gruppen beschleunigt, vorzugsweise mindestens einen Vernetzer (B1), welcher ausgewählt ist aus
(i) Lewissäuren,
(ii) Brönstedsäuren, unterschiedlich von Carbonsäuren,
(iii) Aminen, umfassend mindestens eine Aminogruppe,
(iv) Alkoholen, umfassend mindestens zwei OH-Gruppen,
(v) Anhydriden von Carbonsäuren,
(vi) Carbonsäuren, umfassend mindestens eine Carbonsäure-Gruppe, oder
jegliche Gemische davon, vorzugsweise ist der Vernetzer (B1) wie in einem der vorhergehenden Ansprüche 1 und 6 bis 10 definiert; und
wahlweise das erhaltene Kabel vernetzend.

16. Das Verfahren gemäß Anspruch 15 zum Herstellen eines Stromkabels, umfassend einen Leiter umgeben von mindestens einer inneren halbleitenden Schicht, einer Isolationsschicht und einer äußeren halbleitenden Schicht, in dieser Reihenfolge, worin das Verfahren die Schritte umfasst von
(a1)
- Bereitstellen und Mischen, vorzugsweise Schmelzmischen in einem Extruder, einer ersten halbleitenden Zusammensetzung, umfassend ein Polymer, einen leitenden Füllstoff und wahlweise weitere Komponente(n) für die innere halbleitende Schicht,
- Bereitstellen und Mischen, vorzugsweise Schmelzmischen in einem Extruder, eine Polymerzusammensetzung für die Isolationsschicht,
- Bereitstellen und Mischen, vorzugsweise Schmelzmischen in einem Extruder, eine zweite halbleitende Zusammensetzung, umfassend ein Polymer, einen leitenden Füllstoff und wahlweise weitere Komponente(n) für die äußere halbleitende Schicht;
(b1)
- Aufbringen auf einen Leiter, vorzugsweise durch Coextrusion,
- eine Schmelzmischung der ersten halbleitenden Zusammensetzung erhalten in Schritt (a1), um die innere halbleitende Schicht zu bilden,
- eine Schmelzmischung der Polymerzusammensetzung erhalten in Schritt (a1), um die Isolationsschicht zu bilden, und
- eine Schmelzmischung der zweiten halbleitenden Zusammensetzung erhalten in Schritt (a1), um die äußere halbleitende Schicht zu bilden, worin mindestens die zweite halbleitende Zusammensetzung der erhaltenen äußeren halbleitenden Schicht umfasst, vorzugsweise besteht aus, einer Polyolefinzusammensetzung, umfassend
- ein Olefinpolymer (A), umfassend Epoxy-Gruppen;
- mindestens einen Vernetzer (B), welcher die Vernetzungsreaktion der Epoxy-Gruppen beschleunigt und welche ausgewählt ist aus
(i) Lewissäuren wie in einem der vorhergehenden Ansprüche 1 bis 14 definiert,
(ii) Brönstedsäuren unterschiedlich von Carbonsäuren wie in einem der vorhergehenden Ansprüche 1 bis 14 definiert; oder
(iii) jegliche Gemische davon; und
- ein leitender Füllstoff; und
worin wahlweise und vorzugsweise die erhaltene Isolationsschicht und wahlweise die erhaltene innere halbleitende Schicht umfasst, vorzugsweise besteht aus, einer Polyolefinzusammensetzung (b) umfassend,
- ein Olefinpolymer (A), umfassend Epoxy-Gruppen; und
- mindestens einen Vernetzer (B1), welcher die Vernetzungsreaktion der Epoxy-Gruppen beschleunigt, vorzugsweise mindestens ein Vernetzer (B1), welcher ausgewählt ist aus
(i) Lewissäuren,
(ii) Brönstedsäuren, unterschiedlich von Carbonsäuren,
(iii) Aminen, umfassend mindestens eine Aminogruppe,
(iv) Alkoholen, umfassend mindesten zwei OH Gruppen,
(v) Anhydriden von Carbonsäuren,
(vi) Carbonsäuren, umfassend mindestens eine Carbonsäure-Gruppe,
oder jegliche Gemische davon; und
(c1)
wahlweise, und vorzugsweise, Vernetzen von mindestens der erhaltenen äußeren halbleitenden Schicht in Anwesenheit des Vernetzers (B), wahlweise, und vorzugsweise, Vernetzen der erhaltenen Isolationsschicht in Anwesenheit des Vernetzers (B1), und wahlweise Vernetzen der erhaltenen inneren halbleitenden Schicht, welche wahlweise die Polyolefinzusammensetzung (b) umfasst.

## Revendications

1. Câble, comprenant un conducteur entouré par une ou plusieurs couche(s), dans lequel au moins une couche comprend une composition de polyoléfine comprenant,
- un polymère d'oléfine (A) comprenant des groupes époxy ;
- au moins un agent de réticulation (B) qui accélère la réaction de réticulation de groupes époxy et qui est choisi parmi
(i) des acides de Lewis, qui sont des composés de la formule (I) suivante
M^{+m}Lₙ (I),
dans laquelle
- M est un élément choisi parmi des lanthanides ou un élément des groupes 2 à 14 de la table périodique IUPAC (1989) à l'exception des éléments du groupe 7 de la table périodique IUPAC (1989) et de Be, C, Si, Ge, Tl, Pb, Tc, Hg et Cd ;
- chaque L est identique ou différent et est un ligand lié à M et est un groupe hydrocarbyle substitué ou saturé non substitué ou partiellement insaturé choisi parmi
(i) un groupe hydrocarbyle saturé ou partiellement insaturé, linéaire ou ramifié, facultativement substitué par jusqu'à 30 atomes de carbone ; plus préférablement alkyle en C1 à C20 linéaire ou ramifié ; alcényle en C2 à C20 linéaire ou ramifié ; ou alcynyle en C2 à C20 linéaire ou ramifié, plus préférablement alkyle en C1 à C20 linéaire ou ramifié ; ou alcényle en C2 à C20 linéaire ou ramifié ;
(ii) un groupe hydrocarbyle saturé ou partiellement insaturé, linéaire ou ramifié, facultativement substitué qui comporte un fragment hydrocarbyle cyclique saturé ou partiellement insaturé ou un groupe hydrocarbyle saturé ou partiellement insaturé, linéaire ou ramifié, facultativement substitué qui comporte un fragment hydrocarbyle aromatique ; de préférence un groupe hydrocarbyle saturé ou partiellement insaturé, linéaire ou ramifié, facultativement substitué qui comporte un fragment hydrocarbyle cyclique saturé ou partiellement insaturé ; ou
(iii) un groupe hydrocarbyle cyclique saturé ou partiellement insaturé facultativement substitué dans lequel un ou plusieurs atomes cycliques sont facultativement un hétéroatome choisi parmi N, O, P, S ou Si, de préférence N, O ou P ;
et
m est 1 à 4, et n est 1 à 4, à la condition que m-n est 0 ;
ou que l'acide de Lewis est choisi parmi un sous-groupe de composés de formule (I),
M^{+m}I₋ₙ (I),
dans laquelle
M est Ti, Zr, Hf, Sn, Cu, Zn ou Al, de préférence Ti, Sn, Zn, Cu ou Al ;
chaque L est un groupe comprenant de 1 à 30 atomes de carbone et choisi indépendamment parmi
- un hydrocarbyle facultativement substitué sans hétéroatomes ;
- un groupe -O-hydrocarbyle facultativement substitué ;
- un groupe -O-(C=O)-hydrocarbyle ;
- un groupe -O-(P=O)-hydrocarbyle ; ou
- deux ou trois L sont -O-hydrocarbyl- liés les uns aux autres via un atome X, qui est un atome C ou N, et forment conjointement avec M un système d'anneau cyclique ; chaque hydrocarbyle étant indépendamment tel que défini ci-dessus ; et
n est 4 dans le cas de Ti, Zr, Hf ou Sn ; 3 dans le cas de Al ou B ; et 2 dans le cas de Cu ou Zn
(ii) des acides de Bronsted différents d'acides carboxyliques qui est un acide sulfonique organique aromatique comprenant l'élément structural :
Ar(SO₃H)ₓ (II)
dans laquelle
Ar est un groupe aryle qui peut être substitué ou non substitué, et s'il est substitué, alors de préférence par au moins un groupe hydrocarbyle jusqu'à 50 atomes de carbone, et x étant au moins 1, ou un précurseur de l'acide sulfonique de formule (II) comprenant un anhydride d'acide de celui-ci ou un acide sulfonique de formule (II) qui a été fourni avec un ou plusieurs groupe(s) protecteur(s) hydrolysable(s), par exemple un groupe acétyle qui est éliminable par hydrolyse ; ou
(iii) des mélanges quelconques de ceux-ci, et
- facultativement une charge conductrice.

2. Câble selon la revendication 1, qui est un câble d'alimentation comprenant un conducteur entouré par au moins une couche interne semi-conductrice, une couche d'isolation et une couche externe semi-conductrice, dans cet ordre, au moins une couche comprenant, de préférence étant constituée d'une composition de polyoléfine comprenant
- un polymère d'oléfine (A) comprenant des groupes époxy ;
- au moins un agent de réticulation (B) qui accélère la réaction de réticulation de groupes époxy et qui est choisi parmi
(i) des acides de Lewis tels que définis dans la revendication 1,
(ii) des acides de Bronsted différents d'acides carboxyliques tels que définis dans la revendication 1 ; ou
(iii) des mélanges quelconques de ceux-ci, et
- facultativement une charge conductrice, de préférence du noir de carbone.

3. Câble selon la revendication 1 ou 2, dans lequel une ou plusieurs autre(s) couche(s) comprend/comprennent une composition de polyoléfine (b) comprenant
- un polymère d'oléfine (A) comprenant des groupes époxy ; et
- au moins un agent de réticulation (B1) qui accélère la réaction de réticulation de groupes époxy, de préférence au moins un agent de réticulation (B1) qui est choisi parmi
(i) des acides de Lewis,
(ii) des acides de Bronsted différents d'acides carboxyliques,
(iii) des amines comprenant au moins un groupe amino,
(iv) des alcools comprenant au moins deux groupes OH,
(v) des anhydrides d'acides carboxyliques,
(vi) des acides carboxyliques comprenant au moins un groupe acide carboxylique,
ou des mélanges quelconques de ceux-ci.

4. Câble selon l'une quelconque des revendications précédentes, qui est un câble d'alimentation comprenant un conducteur entouré par au moins une couche interne semi-conductrice, une couche d'isolation et une couche externe semi-conductrice, dans cet ordre, l'au moins une de la couche interne semi-conductrice et la couche externe semi-conductrice comprenant, de préférence étant constituée de, une composition de polyoléfine comprenant,
- un polymère d'oléfine (A) comprenant des groupes époxy ; et
- au moins un agent de réticulation (B) qui accélère la réaction de réticulation de groupes époxy et qui est choisi parmi
(i) des acides de Lewis tels que définis dans la revendication 1,
(ii) des acides de Bronsted différents d'acides carboxyliques tels que définis dans la revendication 1 ; ou
(iii) des mélanges quelconques de ceux-ci ; et
une charge conductrice, de préférence du noir de carbone.

5. Câble selon l'une quelconque des revendications précédentes, qui est un câble d'alimentation comprenant un conducteur entouré par au moins une couche interne semi-conductrice, une couche d'isolation et une couche externe semi-conductrice, dans cet ordre, au moins la couche externe semi-conductrice, comprenant, de préférence étant constituée de, une composition semi-conductrice de polyoléfine qui comprend,
- un polymère d'oléfine (A) comprenant des groupes époxy ;
- au moins un agent de réticulation (B) qui accélère la réaction de réticulation de groupes époxy et qui est choisi parmi
(i) des acides de Lewis tels que définis dans la revendication 1,
(ii) des acides de Bronsted différents d'acides carboxyliques tels que définis dans la revendication 1 ; ou
(iii) des mélanges quelconques de ceux-ci, et
une charge conductrice, de préférence du noir de carbone ;
et, facultativement, une ou plusieurs des autre(s) couche(s) qui est de préférence au moins la couche d'isolation, comprenant, de préférence étant constituée de, une composition de polyoléfine (b) comprenant
- un polymère d'oléfine (A) comprenant des groupes époxy ; et
- au moins un agent de réticulation (B1) qui accélère la réaction de réticulation de groupes époxy, de préférence un agent de réticulation (B1) qui est choisi parmi
(i) des acides de Lewis,
(ii) des acides de Bronsted différents d'acides carboxyliques,
(iii) des amines comprenant au moins un groupe amino,
(iv) des alcools comprenant au moins deux groupes OH,
(v) des anhydrides d'acides carboxyliques,
(vi) des acides carboxyliques comprenant au moins un groupe acide carboxylique,
ou des mélanges quelconques de ceux-ci.

6. Câble selon l'une quelconque des revendications précédentes, dans lequel les acides de Lewis sont composés d'un sous-groupe d'acides de Lewis de composés de formule (I), dans lequel
- M est choisi parmi des lanthanides et un élément des groupes 4, 11, 12, 13 et 14 de la table périodique IUPAC (1989) à l'exception des éléments du groupe 7 de la table périodique IUPAC (1989) et de C, Si, Ge, Tl, Pb, Tc, Hg et Cd, plus préférablement M est un élément choisi parmi le groupe 4, 11, 12, 13 ou 14 tel que défini ci-dessus, plus préférablement M est choisi parmi Ti (titane), Zr (zirconium), Hf (hafnium), Sn (étain), Al (aluminium), Cu (cuivre), Zn (zinc) et B(bore).

7. Câble selon l'une quelconque des revendications précédentes, dans lequel l'acide de Lewis est choisi parmi un sous-groupe des composés de formule (I), ledit groupe hydrocarbyle substitué ou saturé non substitué ou partiellement non substitué en tant que L étant plus préférablement
(i) un groupe hydrocarbyle saturé ou partiellement insaturé, linéaire ou ramifié, facultativement substitué ; plus préférablement alkyle en C1 à C20 linéaire ou ramifié ; alcényle en C2 à C20 linéaire ou ramifié ; ou alcynyle en C2 à C20 linéaire ou ramifié, plus préférablement alkyle en C1 à C20 linéaire ou ramifié ; ou alcényle en C2 à C20 linéaire ou ramifié ;
(ii) un groupe hydrocarbyle saturé ou partiellement insaturé, linéaire ou ramifié, facultativement substitué qui comporte un fragment hydrocarbyle cyclique saturé ou partiellement insaturé ou un groupe hydrocarbyle saturé ou partiellement insaturé, linéaire ou ramifié, facultativement substitué qui comporte un fragment hydrocarbyle aromatique facultativement substitué, de préférence un groupe hydrocarbyle saturé ou partiellement insaturé, linéaire ou ramifié, facultativement substitué qui comporte un fragment hydrocarbyle cyclique saturé ou partiellement insaturé ; ou
(iii) un groupe hydrocarbyle cyclique saturé ou partiellement insaturé facultativement substitué dans lequel un ou plusieurs atomes cycliques sont facultativement un hétéroatome choisi parmi N, O, P, S ou Si, de préférence N, O ou P.

8. Câble selon l'une quelconque des revendications précédentes, dans lequel l'acide de Lewis est choisi parmi un sous-groupe de composés de formule (I), dans lequel
M est Ti, Sn, ou Al, et le plus préférablement Ti ou A1 ;
chaque L est un groupe choisi indépendamment parmi
- alkyle en C1 à C20 linéaire ou ramifié comportant facultativement un ou deux, de préférence un, le cas échéant, un/des substituant(s) tels que définis ci-dessus, de préférence alkyle en C1 à C20 linéaire ou ramifié ;
- -O-(alkyle en C1 à C20 linéaire ou ramifié) comportant facultativement un ou deux, de préférence un, le cas échéant, un/des substituant(s) tels que définis ci-dessus ;
- -O-(alcényle en C2 à C20 linéaire ou ramifié) comportant facultativement un ou deux, de préférence un, le cas échéant, un/des substituant(s) tels que définis ci-dessus, plus préférablement -O-(alcényle en C2 à C20 linéaire ou ramifié) facultativement et de préférence comportant un ou deux, de préférence un, substituant qui est de préférence (=O) ;
- -O-(P=O)-(alkyle en C1 à C20 linéaire ou ramifié) comportant facultativement un ou deux, de préférence un, le cas échéant, un/des substituant(s) tels que définis ci-dessus ;
- -O-(P=O)-(alcényle en C2 à C20 linéaire ou ramifié) comportant facultativement un ou deux, de préférence un, le cas échéant, un/des substituant(s) tels que définis ci-dessus, plus préférablement O-(P=O)-(alkyle en C1 à C20 linéaire ou ramifié) ; ou
- trois L sont indépendamment -O-éthylène-, chacun étant lié à X qui est N et les trois L forment conjointement avec M un système cyclique polycyclique ; et
n est 4 dans le cas de Ti, Zr, Hf ou Sn, 3 dans le cas de Al ou B et 2 dans le cas de Cu ou Zn ; et
les acides de Lewis préférés sont choisis parmi
isopropanolate de triéthanolatoamine-titane (numéro CAS 74665-17-1), tétrabutanolate de zirconium (numéro CAS 1071-76-7), tris(diéthylphosphinato)aluminium (numéro CAS 225789-38-8), distéarate d'aluminium (numéro CAS 300-92-5), dilauréate de dioctyl-étain (numéro CAS 3648-18-81), tristéarate-mono-isopropanolate de titane, acétylacétonate de zinc (II) hydraté (numéro CAS 108503-47-5), acétylacétonate de cuivre (II) (numéro CAS : 13395-16-9), diacétylacétonate-diisopropanolate de titane (numéro CAS : 27858-32-8), butoxyde de titane (IV) (numéro CAS 5593-70-4), bis(acétylacétonate) de diisopropoxyde de titane (numéro CAS 17927-72-9), isopropoxyde de titane (4) (numéro CAS 546-68-9) ; tétrakis(2-éthylhexyl)orthotitanate (numéro CAS 1070-10-6), tétrakis(triéthanolaminato)zirconium (IV) (numéro CAS 101033-44-7), stéarate de zinc (numéro CAS 557-05-1), complexe trifluorure de bore-éthylamine (numéro CAS 75-23-0). L'acide de Lewis le plus préféré est choisi parmi l'isopropanolate de triéthanolatoamine-titane (numéro CAS 74665-17-1); tris(diéthylphosphinato)aluminium (numéro CAS 225789-38-8) ; bis(acétylacétonate) de diisopropoxyde de titane (numéro CAS 17927-72-9) ; dilauréate de dioctyl-étain (numéro CAS 3648-18-81) ; acétylacétonate de zinc (II) hydraté (numéro CAS 108503-47-5) ; et acétylacétonate de cuivre (II) numéro CAS 13395-16-9, il encore est préféré entre tous que l'acide de Lewis soit choisi parmi l'isopropanolate de triéthanolatoamine-titane (numéro CAS 74665-17-1).

9. Câble selon l'une quelconque des revendications précédentes, dans lequel l'agent de réticulation (B) est choisi parmi des acides de Lewis, de préférence parmi des acides de Lewis de formule (I) tels que définis dans l'une quelconque des revendications 6 à 8 précédentes.

10. Câble selon la revendication 3, dans lequel l'agent de réticulation (B1) est choisi parmi
(i) des acides de Lewis tels que définis dans l'une quelconque des revendications 1, 6 à 8 précédentes ;
(ii) des acides de Bronsted différents d'acides carboxyliques tels que définis dans la revendication 1 ;
(iii) des amines comprenant au moins un groupe amino étant de préférence choisies parmi une (mono, di ou tri)amine aliphatique saturée avec jusqu'à 50, de préférence 1 à 20, atomes de carbone ; une (mono, di ou tri)amine aliphatique insaturée avec jusqu'à 50, de préférence 1 à 20, atomes de carbone ; un hydrocarbyle aromatique avec jusqu'à 50, de préférence 1 à 20, atomes de carbone ; de préférence comportant au moins deux substituants amino ; le fragment aliphatique ou aromatique pouvant facultativement contenir un ou plusieurs hétéroatomes et l'amine aliphatique ou aromatique pouvant facultativement contenir des substituants supplémentaires ; plus préférablement parmi une méthylamine aliphatique telle que propylamine, stéarylamine, de préférence 1,6-hexadiamine, 1,7-diaminoheptane, trioctamine, aniline, 2-éthylaniline, diéthylènetriamine, triéthylènetétramine et diéthylaminopropylamine ; polyamine cyclique cycloaliphatique telle que menthènediamine, isophoronediamine, bis(4-amino-3-méthylcyclohexyl)méthane et N-aminoéthylpipérazine ; une polyamine aliphatique comprenant un cycle aromatique tel que la méta-xylènediamine, une polyéthylèneimine contenant l'azote d'amine secondaire et tertiaire ; une polyamine aromatique telle que la méthaphénylènediamine, la méthylènediamine et la diaminodiphénylsulfone ; et une polyamine modifiée de polyamines aliphatiques, une polyamine aliphatique comprenant un/des cycle(s) aromatique(s) et/ou polyamines aromatiques pouvant être obtenues par des procédés de modification bien connus, tels qu'une réaction d'addition avec un composé époxy, une réaction d'addition de Michael avec un ester acrylique d'acrylonitrile, et une réaction de Mannich avec un composé de méthylol, par exemple de la famille de l'imidazole, tel que 2-méthylimidazole, 2-éthyl-4 méthylimidazole et 1-cyanoéthyl-2-méthylimidazole, et sel d'acide de tri-2-éthylhexyle d'amine tertiaire tel que tris-diméthylamino-phénol, et tris-diméthylamino-méthyl-phénol ; plus préférablement les amines comprennent au moins deux groupes amino dont des exemples non limitatifs sont 1,7-diaminoheptane, 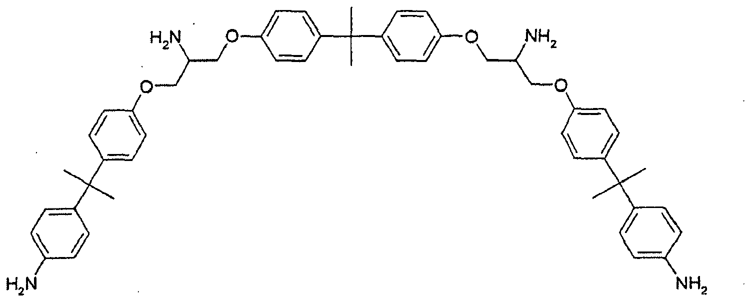 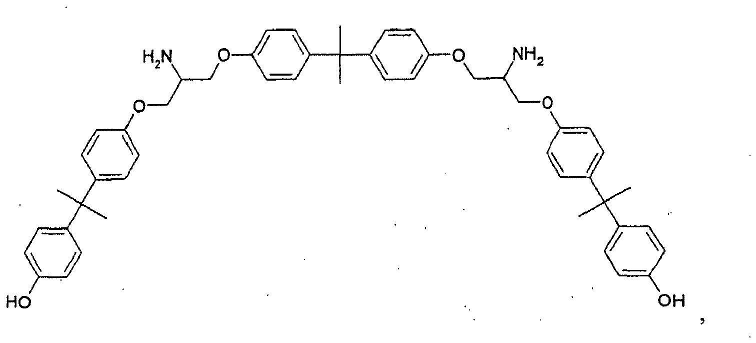 l'amine le plus préférée entre toutes étant le 1,7-diaminoheptane ;
(iv) des alcools comprenant au moins deux groupes OH sont de préférence choisis parmi des di- à hexa-alcools aliphatiques ou des di- à hexa-alcools aromatiques, de préférence parmi des di-, tri- ou tétra-alcools aliphatiques ou des di-, tri- ou tétra-alcools aromatiques ; plus préférablement de tels alcools comprennent de 2 à 100, de préférence 15 à 90, plus préférablement 15 à 90, le plus préférablement 30 à 70, atomes de carbone et peuvent facultativement comprendre des hétéroatomes supplémentaires qui, le cas échéant, sont de préférence choisis parmi N, S, O et/ou P, plus préférablement parmi S, O ou P encore plus préférablement parmi S ou O et le plus préférablement en outre le(s) hétéroatome(s) supplémentaire(s) est/sont O ;
(v) les anhydrides d'acides carboxyliques sont de préférence des anhydrides d'acide carboxylique comprenant au moins un groupe anhydride d'acide carboxylique et peuvent contenir des substituants supplémentaires, tels que des substituants d'acide carboxylique, ou des hétéroatomes supplémentaires, tels tel que ceux défini ci-dessus pour les alcools (iv) ; des anhydrides d'acide carboxylique préférables sont choisis parmi des anhydrides d'acide carboxylique aliphatiques ou des anhydrides d'acide carboxylique cycliques saturés ou partiellement insaturés ou des anhydrides d'acide carboxylique aromatiques ; des anhydrides plus préférables d'acides carboxyliques sont choisis parmi des anhydrides d'acides carboxyliques cycliques saturés ou partiellement insaturés contenant jusqu'à 50, de préférence 1 à 20, atomes de carbone ; l'anhydride d'acide carboxylique aliphatique insaturé contenant jusqu'à 50, de préférence 1 à 20, atomes de carbone ; ou anhydrides d'acide carboxylique aromatique contenant jusqu'à 50, de préférence 1 à 20, atomes de carbone ; ou des mélanges quelconques de ceux-ci, des anhydrides d'acides carboxyliques plus préférables sont choisis parmi des anhydrides d'acides carboxyliques dérivés de l'acide butyrique, l'acide maléique, l'acide itaconique, l'acide fumarique, l'acide benzoïque, une huile végétale telle que l'huile de palme, l'huile de baleine, un acide gras extrait d'huile animale telle que l'huile de suif de boeuf, l'acide laurique, l'acide pulmitique, l'acide stéarique, l'acide oléique, plus préférablement dérivés de composés comprenant deux ou plus groupes carboxyle, tels que l'acide DL-malique, l'acide sébacique, l'acide succinique, l'acide adipique, l'acide thiodipropionique, l'acide citraconique, l'acide citrique, l'acide phtalique ; et le plus préférablement de l'acide DL-malique et l'acide sébacique, l'anhydride d'acide carboxylique le plus préféré est l'anhydride 1,2,4-benzènetricarboxylique, numéro CAS 552-30-7 ;
(vi) des acides carboxyliques comprenant au moins un groupe acide carboxylique sont de préférence choisis parmi des acides carboxyliques contenant des composés ; des copolymères d'oléfine avec un composé comprenant un/des groupe(s) acide(s) ; ou un polymère modifié par un acide, tel qu'un polyéthylène modifié par un acide, un polypropylène modifié par acide et une cire modifiée par un acide ; des acides carboxyliques plus préférables sont choisis parmi un copolymère d'éthylène-acide acrylique, un copolymère d'éthylène-acide méthacrylique, un copolymère d'éthylène-acide crotonique, un copolymère d'éthylène-anhydride maléique, un polyéthylène modifié par l'anhydride d'acide maléique et un pyrolysat de copolymère d'éthylène-acrylate d'éthyle.

11. Câble selon l'une quelconque des revendications précédentes, dans lequel le polymère d'oléfine (A) est un copolymère d'éthylène avec au moins des motifs de comonomère contenant des groupes époxy et facultativement avec d'autre(s) comonomère(s) différent(s) de motifs de monomère contenant des groupes époxy, dont l'autre comonomère est de préférence un comonomère polaire différent des motifs de monomère contenant des groupes époxy, plus préférablement un groupe acrylate ou acétate contenant un motif de comonomère, plus préférablement le polymère d'oléfine (A) est choisi parmi un copolymère d'éthylène avec des motifs de comonomère de méthacrylate de glycidyle ou un copolymère d'éthylène avec des motifs de comonomère polaires choisis parmi des motifs de comonomère de (méth)acrylate d'alkyle ou des motifs de comonomère d'acétate de vinyle et des motifs de comonomère de méthacrylate de glycidyle.

12. Câble selon l'une quelconque des revendications précédentes, dans lequel la quantité de motifs de monomère contenant des groupes époxy est de 0,1 à 10 % en poids sur la base de la quantité de polymère d'oléfine (A).

13. Câble selon l'une quelconque des revendications précédentes qui comprend en outre
un polymère (C) qui est un homo- ou copolymère d'alpha-oléfine comprenant
- des motifs de monomère d'alpha-oléfine (Q) choisis parmi une alpha-oléfine en C2 à C10 ; et
- facultativement, des motifs de monomère (R) choisis parmi une ou plusieurs alpha-oléfine(s) différente(s) de (Q) ; ou
un élastomère (D) qui est de préférence un caoutchouc nitrile, ou
des mélanges quelconques de ceux-ci.

14. Câble selon l'une quelconque des revendications précédentes dans lequel la quantité de la charge conductrice est comprise entre 10 et 50 % en poids sur la base de la quantité totale de la composition de polyoléfine, de sorte que, de préférence, la charge conductrice soit du noir de carbone.

15. Procédé pour produire un câble tel que défini dans l'une quelconque des revendications 1 à 14 précédentes comprenant un conducteur entouré par au moins une couche, dans laquelle l'au moins une couche est formée d'une composition de polyoléfine qui comprend
- un polymère d'oléfine (A) comprenant des groupes époxy ; et
- au moins un agent de réticulation (B) qui accélère la réaction de réticulation de groupes époxy et qui est choisi parmi
(i) des acides de Lewis tels que définis dans l'une quelconque des revendications 1 à 14 précédentes,
(ii) des acides de Bronsted différents des acides carboxyliques tels que définis dans l'une quelconque des revendications 1 à 14 précédentes ; ou
(iii) des mélanges quelconques de ceux-ci, et
- facultativement une charge conductrice, de préférence du noir de carbone ; et facultativement la réticulation du câble obtenu ;
de préférence pour produire un câble d'alimentation comprenant un conducteur entouré par au moins une couche interne semi-conductrice, une couche d'isolation et une couche externe semi-conductrice, dans cet ordre, l'au moins une de la couche interne semi-conductrice et la couche externe semi-conductrice, de préférence au moins la couche externe semi-conductrice, étant formée à partir de la composition de polyoléfine qui comprend,
- un polymère d'oléfine (A) comprenant des groupes époxy ; et
- au moins un agent de réticulation (B) qui accélère la réaction de réticulation de groupes époxy et qui est choisi parmi
(i) des acides de Lewis tels que définis dans l'une quelconque des revendications 1 à 14 précédentes,
(ii) des acides de Bronsted différents d'acides carboxyliques tels que définis dans l'une quelconque des revendications 1 à 14 précédentes ;
(iii) ou des mélanges quelconques de ceux-ci, et
- une charge conductrice, de préférence du noir de carbone ;
et, facultativement, une ou plusieurs de la/les autre(s) couche(s), de préférence au moins la couche d'isolation, sont formées à partir d'une composition de polyoléfine (b) comprenant
- un polymère d'oléfine (A) comprenant des groupes époxy, de préférence tel que défini dans l'une quelconque des revendications 11 ou 12 précédentes ; et
- au moins un agent de réticulation (B1) qui accélère la réaction de réticulation de groupes époxy, de préférence au moins un agent de réticulation (B1) qui est choisi parmi
(i) des acides de Lewis,
(ii) des acides de Bronsted différents d'acides carboxyliques,
(iii) des amines comprenant au moins un groupe amino,
(iv) des alcools comprenant au moins deux groupes OH,
(v) des anhydrides d'acides carboxyliques,
(vi) des acides carboxyliques comprenant au moins un groupe acide carboxylique,
ou des mélanges quelconques de ceux-ci, de préférence l'agent de réticulation (B1) est tel que défini dans l'une quelconque des revendications 1 et 6 à 10 précédentes ; et
facultativement la réticulation du câble obtenu.

16. Procédé selon la revendication 15 pour produire un câble d'alimentation comprenant un conducteur entouré par au moins une couche interne semi-conductrice, une couche d'isolation et une couche externe semi-conductrice, dans cet ordre, le procédé comprenant les étapes consistant à
(a1)
- fournir et mélanger, de préférence mélanger à chaud dans une extrudeuse, une première composition semi-conductrice comprenant un polymère, une charge conductrice et facultativement un/des composant(s) supplémentaire(s) pour la couche interne semi-conductrice,
- fournir et mélanger, de préférence mélanger à chaud dans une extrudeuse, une composition de polymère pour la couche d'isolation,
- fournir et mélanger, de préférence mélanger à chaud dans une extrudeuse, une deuxième composition semi-conductrice comprenant un polymère, une charge conductrice et facultativement un/des composant(s) supplémentaire(s) pour la couche externe semi-conductrice,
(b1)
- appliquer sur un conducteur, de préférence par coextrusion,
- un mélange fondu de la première composition semi-conductrice obtenue à partir de l'étape (a1) pour former la couche interne semi-conductrice,
- un mélange fondu de la composition de polymère obtenue dans l'étape (a1) pour former la couche d'isolation, et
- un mélange fondu de la deuxième composition semi-conductrice obtenue dans l'étape (a1) pour former la couche externe semi-conductrice,
dans lequel au moins la deuxième composition semi-conductrice de la couche externe semi-conductrice obtenue comprend, de préférence est constituée de, une composition de polyoléfine comprenant
- un polymère d'oléfine (A) comprenant des groupes époxy ;
- au moins un agent de réticulation (B) qui accélère la réaction de réticulation de groupes époxy et qui est choisi parmi
(i) des acides de Lewis tels que définis dans l'une quelconque des revendications 1 à 14 précédentes,
(ii) des acides de Bronsted différents d'acides carboxyliques tels que définis dans l'une quelconque des revendications 1 à 14 précédentes ; ou
(iii) des mélanges quelconques de ceux-ci ; et
- une charge conductrice ; et
dans lequel, facultativement et de préférence, la couche d'isolation obtenue et facultativement la couche interne semi-conductrice obtenue comprend, de préférence est constituée de, une composition de polyoléfine (b) comprenant,
- un polymère d'oléfine (A) comprenant des groupes époxy ; et
au moins un agent de réticulation (B1) qui accélère la réaction de réticulation de groupes époxy, de préférence au moins un agent de réticulation (B1) qui est choisi parmi
(i) des acides de Lewis,
(ii) des acides de Bronsted différents d'acides carboxyliques,
(iii) des amines comprenant au moins un groupe amino,
(iv) des alcools comprenant au moins deux groupes OH,
(v) des anhydrides d'acides carboxyliques,
(vi) des acides carboxyliques comprenant au moins un groupe acide carboxylique,
ou des mélanges quelconques de ceux-ci ; et
(c1)
facultativement, et de préférence, réticuler au moins la couche externe semi-conductrice obtenue en présence de l'agent de réticulation (B), facultativement, et de préférence, réticuler la couche d'isolation obtenue en présence de l'agent de réticulation (B1), et facultativement réticuler la couche interne semi-conductrice obtenue, qui comprend facultativement la composition de polyoléfine (b).
